# EUROPEAN PATENT SPECIFICATION

(11) **EP 3 573 128 B1**
(45) Date of publication and mention of the grant of the patent: **22.05.2024**
(21) Application number: 18741597.1
(22) Date of filing: 18.01.2018
(51) Int. Cl.: A01D 34/64, A01D 34/82, A01D 34/00, A01D 34/81, B64C 37/00, A01D 34/78

(54) **SELF-MOVING DEVICE AND AUTOMATIC WORKING METHOD THEREOF**
SELBSTBEWEGENDE VORRICHTUNG UND AUTOMATISCHES ARBEITSVERFAHREN DAFÜR
DISPOSITIF AUTOMOTEUR ET PROCÉDÉ DE FONCTIONNEMENT AUTOMATIQUE ASSOCIÉ

(30) Priority: 18.01.2017 CN 201720057457 U; 20.01.2017 CN 201710042648; 20.01.2017 CN 201720072409 U
(43) Date of publication of application: 27.11.2019
(73) Proprietor: Positec Power Tools (Suzhou) Co., Ltd, Suzhou, Jiangsu 215123 (CN)
(72) Inventor: WANG, Chunyan, Suzhou Jiangsu 215123 (CN); YANG, Xiaogang, Suzhou Jiangsu 215123 (CN); WONG, Ka Tat Kelvin, Suzhou Jiangsu 215123 (CN); DONG, Yongming, Suzhou Jiangsu 215123 (CN); WU, Jun, Suzhou Jiangsu 215123 (CN); CHEN, Peng, Suzhou Jiangsu 215123 (CN); LIU, Changhua, Suzhou Jiangsu 215123 (CN)
(74) Representative: Kilburn & Strode LLP
(86) International application number: PCT/CN2018/073268
(87) International publication number: WO 2018/133822

(56) References cited:
- EP-A2- 2 213 570
- CN-A- 1 639 886
- CN-A- 105 905 274
- CN-A- 106 081 130
- CN-A- 106 304 947
- CN-U- 205 124 349
- CN-U- 206 547 363
- DE-A1-102013 104 447
- JP-A- H07 296 789

## Description

### BACKGROUND

### Technical Field

The present invention relates to a self-moving device and an automatic working method of same.

### Related Art

A self-moving device such as an automatic mower is a common gardening tool. Because an automatic mower is generally used outdoors, it is inconvenient to power the intelligent lawn mower. Therefore, an automatic mower is usually powered by a battery pack. In addition, the battery pack is usually fully charged before use, and it is often expected to charge the battery pack once to complete a grass cutting process. Therefore, a battery pack with high capacity is expected if a grass cutting area is relatively large. In contrast, only a battery pack with relatively low capacity needs to be used to reduce costs.

However, containers used to accommodate battery packs of existing automatic mowers have fixed volumes and sizes. That is, if the capacity of a battery pack needs to be changed, a volume of the battery pack cannot be changed, and only the electrical capacity of an individual battery can be changed. However, it is more expensive to improve the electrical capacity of a battery than to increase the number of batteries. Therefore, it is inconvenient to change the capacity of battery packs for the existing intelligent lawn mowers.

CN 205 124 349 U discloses an automatic mower with a flying mode. The mower comprises a flight body, a lawn mower and a displacement positioning device arranged on the flight body, a controller, a lawn mower, and a displacement positioning device. The displacement positioning device monitors the position of the flight body in real time and sends the monitored position of the flight body to the controller. The controller controls the direction of movement and/or the amount of movement and/or the direction of rotation of the flight body according to the position of the flight body monitored by the displacement positioning device.

DE 102013104447 A provides an automated and versatile autonomously climbing undercarriage with flight capability that automatically reaches a suitable area for cleaning purposes, repair purposes, and monitoring purposes without being constantly connected to a supply station or base station in the process, and that independently goes to the surface of the facade and independently moves along the surface and away from the surface. The automated and versatile autonomously climbing undercarriage with vacuum suction units as per the invention involves a multicopter with two, three or more rotors or propellers attached to the autonomously climbing undercarriage.

EP 2213570 A discloses a transforming unmanned aerial-to-ground vehicle assembly comprises an aerodynamic flying assembly comprising an unmanned aerial vehicle integrated with an unmanned ground vehicle, a power unit shared by the unmanned aerial vehicle and the unmanned ground vehicle, vehicle controls shared by the unmanned aerial vehicle and the unmanned ground vehicle, a disengagement mechanism to separate the unmanned ground vehicle from the unmanned aerial vehicle, one or more manipulator arms located on either the unmanned aerial vehicle or the unmanned ground vehicle, and landing gear.

### SUMMARY

The invention is defined by the appended claims.

The following technical solution is disclosed herein but not claimed: A self-moving device moves and works in a defined working region, and includes an energy module supplying energy to the self-moving device and a battery mounting portion used to accommodate the energy module, where the battery mounting portion includes a housing, an accommodating cavity defined by the housing, a support accommodated in the accommodating cavity, and a battery accommodating portion located in the accommodating cavity and used to accommodate a battery pack, a connection relationship between the housing and the support at least includes two different connection states, and the battery accommodating portion has different volumes or sizes in the two different connection states.

Preferably, the two different connection states include a first connection state and a second connection state. Preferably, the support is detachably accommodated in the housing.

Preferably, in the first connection state, the support is separate from the housing and is located outside the accommodating cavity, the housing defines the battery accommodating portion in the first connection state, in the second connection state, the support is accommodated in the accommodating cavity and divides the accommodating cavity into at least two parts, and the support and a side of the housing together define the battery accommodating portion in the second connection state.

Preferably, the volume of the battery accommodating portion in the first connection state is greater than the volume of the battery accommodating portion in the second connection state.

Preferably, in both the first connection state and the second connection state, the support is accommodated in the accommodating cavity and divides the accommodating cavity into at least two parts, in the first connection state, the support and a side of the housing define the battery accommodating portion in the first connection state, in the second connection state, the support and a side of the housing define the battery accommodating portion in the second connection state, and the volume of the battery accommodating portion in the first connection state is different from the volume of the battery accommodating portion in the second connection state.

Preferably, the support comprises a front surface and a rear surface that are opposite, in the first connection state, the front surface of the support faces the interior of the housing, and in the second connection state, the rear surface of the support faces the interior of the housing.

Preferably, the support is supported at the bottom of the interior of the housing.

Preferably, the support is movably accommodated in the accommodating cavity and divides the accommodating cavity into at least two parts, the support and a side of the housing define the battery accommodating portion, the support is movable to the first connection state and the second connection state, and the volume of the battery accommodating portion in the first connection state is different from the volume of the battery accommodating portion in the second connection state.

Preferably, the support is displaceable in the accommodating cavity.

Preferably, the housing comprises a guiderail, and the support moves along the guiderail.

Preferably, the battery mounting portion further comprises an elastic component connecting the support and the housing, and the support and a side, far away from the elastic component, of the housing define the battery accommodating portion.

Preferably, the elastic component is fixed at the bottom of the interior of the housing.

Preferably, the support comprises a support plate used to support the battery pack.

Preferably, the support further comprises a limiting wall located around the support plate and used to limit the battery pack, and the support plate, the limiting wall, and a side of the housing define the battery accommodating portion.

Preferably, the support plate is parallel to a side of the housing.

Preferably, the housing comprises an inner housing and a bottom cover fitting the inner housing, the inner housing and the bottom cover define the accommodating cavity, the support plate is parallel to the bottom cover, and the support plate, the limiting wall, and the bottom cover define the battery accommodating portion.

Preferably, the housing comprises an inner housing and a bottom cover fitting the inner housing, the inner housing and the bottom cover define the accommodating cavity, and the support and the bottom cover define the battery accommodating portion.

Preferably, a clamping groove is provided at an edge of the bottom cover, an annular protrusion is provided at an edge of the inner housing, and the annular protrusion is clamped in the clamping groove to fix the inner housing on the bottom cover.

Preferably, the housing further comprises an annular sealing strip, and the annular sealing strip is accommodated in the clamping groove, and is sandwiched between the bottom of the clamping groove and the annular protrusion.

Preferably, a limiting wall for fixing the battery pack is disposed on the bottom cover.

Preferably, an electrode clearance is provided in the support.

Preferably, the energy module is a battery pack.

Preferably, the battery pack is detachably mounted in the battery accommodating portion.

Preferably, a battery holder used to accommodate the battery mounting portion is disposed in the self-moving device, a fixing support is disposed in the battery holder, a clamping portion is disposed on the fixing support, a fitting portion is disposed on the housing, and the clamping portion is clamped at the fitting portion to fix the battery mounting portion in the battery holder.

Preferably, the self-moving device comprises a self-moving device housing, and a part of the self-moving device housing forms the housing of the battery mounting portion.

The following technical solution may further be used in the present invention: A battery mounting support is used to mount and fix a battery pack, where the battery mounting support includes a housing and a support, the housing has an accommodating cavity. A battery accommodating portion used to mount a battery is formed in the accommodating cavity. A connection relationship between the support and the housing includes a first connection state and a second connection state. A volume of the battery accommodating portion in the first connection state is greater than a volume of the battery accommodating portion in the second connection state.

Preferably, the housing includes a bottom housing and an upper cover, a clamping groove is provided at an edge of the bottom housing, an annular protrusion is provided at an edge of the upper cover, and the annular protrusion is clamped in the clamping groove to fix the upper cover on the bottom housing.

Preferably, the housing further includes an annular sealing strip, and the annular sealing strip is accommodated in the clamping groove, and is sandwiched between the bottom of the clamping groove and the annular protrusion.

Preferably, in the first connection state, the support is separate from the housing and is located outside the accommodating cavity, the battery accommodating portion is defined by the housing, in the second connection state, the support is detachably mounted in the accommodating cavity and divides the accommodating cavity into two parts, and the bottom of the housing and the support together define the battery accommodating portion.

Preferably, the support is accommodated and mounted in the accommodating cavity in an operably slidable manner, the battery accommodating portion is formed between the support and the bottom of the accommodating cavity, the support is slidable to the first connection state or the second connection state, and a distance between the support and the bottom of the accommodating cavity in the first connection state is greater than a distance between the support and the bottom of the accommodating cavity in the second connection state.

Preferably, the support includes a partition plate and two side plates that are opposite to each other and are disposed in parallel, two ends of the partition plate are respectively disposed perpendicular to the two side plates, when the support is accommodated and mounted in the accommodating cavity, the side plate is connected to an inner wall of the accommodating cavity, and the battery accommodating portion is formed between the partition plate and the bottom of the accommodating cavity.

Preferably, an electrode clearance is provided in the partition plate.

The following technical solution may further be used in the present invention: A battery assembly includes: the foregoing battery mounting support; and a battery pack, detachably mounted in the battery accommodating portion.

The following technical solution is disclosed herein but not claimed: A lawn mower is provided with a battery holder, where the lawn mower further includes the foregoing battery assembly, and the battery assembly is accommodated and mounted in the battery holder.

Preferably, a fixing support is disposed in the battery holder, a clamping portion is disposed on the fixing support, a fitting portion is disposed on a housing, and the clamping portion is clamped at the fitting portion to fix the battery assembly in the battery holder.

The beneficial effect of the present invention is as follows: At least two connection states are set, and a battery mounting portion has different volumes or sizes in the two different connection states, so that the battery mounting portion accommodates battery packs having different volumes or sizes, and it becomes more flexible for a user to replace battery packs.

The following technical solution is provided as an aspect of the present claimed invention: A self-moving device for moving and working in a defined working region, comprises an automatic mower including a body and a walking module, a flight module, a cutting module and a control module that are disposed on the body, wherein the control module is configured to control the self-moving device to autonomously move and work in the defined working region, a movement mode of the self-moving device includes a walking mode and a flight mode, in the walking mode, the walking module is configured to drive the self-moving device to walk and work, and in the flight mode, the flight module is configured to drive the self-moving device to fly, wherein the flight module is movable, such that in the walking mode, the flight module is located in the body, and in the flight mode, the flight module is exposed from the body, and wherein in the walking mode, the walking module is configured to drive the self-moving device to walk and work in a continuous working region, and in the flight mode, the flight module is configured to drive the self-moving device to fly between discontinuous working regions including at least two sub-regions that are separate from each other.

Preferably, the sub-regions that are separate from each other comprise separate yards or discontinuous slopes.

Preferably, the self-moving device comprises an information acquisition module configured to obtain related information, and the control module controls, according to the related information, the self-moving device to move and work.

Preferably, the related information comprises a timetable, and the control module controls the movement mode of the self-moving device according to the timetable.

Preferably, the self-moving device further comprises a positioning module for obtaining current position information of the self-moving device, the positioning module sends the current position information of the self-moving device to the control module, and the control module controls a flight trajectory of the self-moving device according to the current position information.

Preferably, the related information comprises target position information, and the control module controls the flight trajectory of the self-moving device according to the current position information and the target position information.

Preferably, the related information comprises a flight path, and the control module controls the flight trajectory of the self-moving device according to the current position information and the flight path.

Preferably, the information acquisition module comprises an information presetting module configured to preset related information, and the self-moving device obtains the related information by using the information presetting module.

Preferably, the control module controls the movement mode of the self-moving device according to the related information preset by the information presetting module.

Preferably, the information acquisition module comprises a communications module, the communications module communicates with an intelligent terminal to receive the related information sent by the intelligent terminal, and the self-moving device obtains the related information by using the communications module.

Preferably, the control module controls the movement mode of the self-moving device according to the related information sent by the intelligent terminal.

Preferably, the self-moving device comprises a safety reminder apparatus, and the safety reminder apparatus is turned on in the flight mode.

Preferably, the safety reminder apparatus comprises a warning lamp or an alarm device, and in the flight mode, the warning lamp flashes or the alarm device goes off.

Preferably, the self-moving device further comprises a data acquisition module, the data acquisition module is configured to acquire environment information of the self-moving device, and the control module controls, according to the environment information, the self-moving device to move and work.

Preferably, the data acquisition module is an image acquisition module or a laser radar.

Preferably, in the flight mode, the data acquisition module is configured to acquire whether an abnormal object exists in front of or below the self-moving device to obtain a determining result, and the control module controls a flight trajectory of the self-moving device according to the determining result of the data acquisition module.

Preferably, the self-moving device further comprises an alarm apparatus, and the alarm apparatus is turned on when the data acquisition module acquires that an abnormal object exists.

Preferably, the alarm apparatus comprises a warning lamp.

Preferably, the self-moving device further comprises an accident detection module, the accident detection module is configured to detect whether a flight hindrance occurs for the self-moving device, and if the accident detection module detects that a flight hindrance occurs for the self-moving device, the control module controls the self-moving device to actively stop.

Preferably, the self-moving device comprises an energy module supplying energy to the self-moving device, the accident detection module is configured to detect whether weather or the energy module satisfies a flight condition of the self-moving device, and if the weather or the energy module does not satisfy the flight condition of the self-moving device, the control module controls the self-moving device to actively stop.

Preferably, if the weather or the energy module does not satisfy the flight condition of the self-moving device, the control module controls the self-moving device to choose a nearby flat place to land.

Preferably, the self-moving device comprises a positioning module for obtaining current position information of the self-moving device, and the self-moving device lands and then sends the current position information of the self-moving device to a server.

Preferably, the self-moving device comprises an alarm module, and if the weather or the energy module does not satisfy the flight condition of the self-moving device, the control module controls the alarm module to send alarm information.

Preferably, the self-moving device further comprises a fault detection module, the fault detection module is configured to detect whether the self-moving device encounters a fault, and if the self-moving device encounters a fault, the control module controls the self-moving device to passively stop.

Preferably, the self-moving device comprises a positioning module for obtaining current position information of the self-moving device and an alarm module configured to send alarm information, the self-moving device lands and then sends the current position information of the self-moving device to a server, and the alarm module sends the alarm information.

Preferably, the self-moving device further comprises a protection module, and the protection module is turned on when the self-moving device passively stops.

Preferably, the self-moving device comprises an energy module supplying energy to the self-moving device, the protection module comprises an airbag, and when the self-moving device passively stops, the control module controls the self-moving device to cut off the energy module and deploy the airbag to cover the self-moving device.

Preferably, the protection module further comprises a parachute, and if the self-moving device is at a height exceeding a preset value, the control module controls the parachute to deploy.

Preferably, the weight of the self-moving device is not greater than 25 kg, and a flight height is not greater than 122 meters.

Preferably, the flight module comprises a rotating shaft and a rotary wing assembly driving the self-moving device to fly, and the rotary wing assembly is rotatable around the rotating shaft to change the position of the flight module.

Preferably, the flight module comprises a movement unit, and the movement unit is movable to change the position of the flight module.

Preferably, the flight module comprises a drive motor and a rotary wing assembly, and the rotary wing assembly is driven by the drive motor to rotate.

Preferably, there are four rotary wing assemblies, two rotary wing assemblies are respectively disposed on a left side and a right side of the body, and the four rotary wing assemblies are centrosymmetrically disposed with the gravity of the body as the center.

Preferably, the flight module comprises a plurality of rotary wing assemblies, the rotary wing assembly comprises a support portion, a propeller, and a motor, one end of the support portion is connected to the body, the motor is connected to the other end of the support portion, and the propeller is connected to the motor and is driven by the motor to rotate.

Preferably, the support portion is detachably connected to the body.

Preferably, the flight module further comprises a connecting member used to make the support portion fold relative to the body, and the connecting member is connected between the body and the support portion.

Preferably, the flight module comprises a mounting plate and a plurality of rotary wing assemblies, the mounting plate is disposed at the top of the body, the rotary wing assembly comprises a connecting arm, a propeller, and a motor, one end of the connecting arm is connected to the mounting plate, the other end extends towards an outer side of the mounting plate, the connecting arms are centrosymmetrically disposed with the mounting plate as the center of symmetry and are all located in a same horizontal plane, the motor is connected to the other end of the connecting arm, and the propeller is connected to the motor.

Preferably, the flight module further comprises a connecting member used to make the connecting arm fold relative to the body, and the connecting member is connected to the mounting plate and the connecting arm.

Preferably, the flight module comprises a body propeller, a tail connecting arm, and a tail propeller, the body propeller is mounted at the top of the body, the tail connecting arm is mounted behind the body, the tail propeller is connected to the tail connecting arm, and a rotating direction of the tail propeller is opposite to a rotating direction of the body propeller.

The following technical solution is provided as another aspect of the present claimed invention: An automatic working method of a self-moving device in a defined working region is provided, the self-moving device comprising an automatic mower comprising a walking module, a flight module, and a control module, wherein the control module controls the self-moving device to autonomously move and work in the defined working region, a movement mode of the self-moving device includes a walking mode and a flight mode, in the walking mode, the walking module drives the self-moving device to walk and work, and in the flight mode, the flight module drives the self-moving device to fly, wherein the flight module is movable and in the walking mode, the flight module is located in the body, and in the flight mode, the flight module is exposed from the body and wherein, in the walking mode, the walking module drives the self-moving device to walk and work in a continuous working region, and in the flight mode, the flight module drives the self-moving device to fly between discontinuous working regions includinge at least two sub-regions that are separate from each other.

Preferably, the self-moving device includes an information acquisition module for obtaining related information, and the control module controls, according to the related information, the self-moving device to move and work.

Preferably, the information acquisition module obtains a timetable of the self-moving device, and the control module controls the movement mode of the self-moving device according to the timetable.

Preferably, the self-moving device includes a positioning module for obtaining current position information of the self-moving device, and the control module controls a flight trajectory of the self-moving device according to the current position information.

Preferably, the information acquisition module obtains target position information of the self-moving device, and the control module controls the flight trajectory of the self-moving device according to the current position information and the target position information.

Preferably, the information acquisition module obtains a flight path of the self-moving device, and the control module controls the flight trajectory of the self-moving device according to the current position information and the flight path.

Preferably, the self-moving device obtains the related information in a preset manner.

Preferably, the self-moving device obtains the related information in a communication manner.

Preferably, the self-moving device includes a safety reminder apparatus, and the safety reminder apparatus is turned on in the flight mode.

Preferably, the safety reminder apparatus includes a warning lamp or an alarm device, and in the flight mode, the warning lamp flashes or the alarm device goes off.

Preferably, the self-moving device further includes a data acquisition module, the data acquisition module acquires environment information of the self-moving device, and the control module controls, according to the environment information, the self-moving device to move and work.

Preferably, the data acquisition module includes an image acquisition module or a laser radar.

Preferably, in the flight mode, the data acquisition module acquires whether an abnormal object exists in front of or below the self-moving device to obtain a determining result, and the control module controls a flight trajectory of the self-moving device according to the determining result.

Preferably, the self-moving device includes an alarm apparatus, and the alarm apparatus is turned on when the data acquisition module acquires that an abnormal object exists.

Preferably, the alarm apparatus is a warning lamp, and when the data acquisition module acquires that an abnormal object exists, the warning lamp flashes.

Preferably, the self-moving device further includes an accident detection module, in the flight mode, the accident detection module detects whether a flight hindrance occurs for the self-moving device, and if the accident detection module detects that a flight hindrance occurs for the self-moving device, the control module controls the self-moving device to actively stop.

Preferably, the self-moving device includes an energy module supplying energy to the self-moving device, the accident detection module is configured to detect whether weather or the energy module satisfies a flight condition of the self-moving device, and if the weather or the energy module does not satisfy the flight condition of the self-moving device, the control module controls the self-moving device to actively stop.

Preferably, if the weather or the energy module does not satisfy the flight condition of the self-moving device, the control module controls the self-moving device to choose a nearby flat place to land.

Preferably, the self-moving device includes a positioning module for obtaining current position information of the self-moving device, and the self-moving device lands and then sends the current position information of the self-moving device to a server.

Preferably, the self-moving device includes an alarm module, and if the weather or the energy module does not satisfy the flight condition of the self-moving device, the control module controls the alarm module to send alarm information.

Preferably, the self-moving device further includes a fault detection module, in the flight mode, the fault detection module detects whether the self-moving device encounters a fault, and if the self-moving device encounters a fault, the control module controls the self-moving device to passively stop.

Preferably, the self-moving device includes a positioning module for obtaining current position information of the self-moving device and an alarm module configured to send alarm information, the self-moving device lands and then sends the current position information of the self-moving device to a server, and the alarm module sends the alarm information.

Preferably, the self-moving device further includes a protection module, and the protection module is turned on when the self-moving device passively stops.

Preferably, the self-moving device includes an energy module supplying energy to the self-moving device, the protection module includes an airbag, and when the self-moving device passively stops, the control module controls the self-moving device to cut off the energy module and deploy the airbag to cover the self-moving device.

Preferably, the protection module further includes a parachute, and when the self-moving device passively stops, if the self-moving device is at a height exceeding a preset value, the control module controls the parachute to deploy.

Preferably, in the flight mode, the weight of the self-moving device is not greater than 25 kg, and a flight height is not greater than 122 meters.

Preferably, the flight module is detachable, and in the walking mode, the flight module is detached from the self-moving device.

Preferably, the flight module is foldable, and in the walking mode, the flight module is folded.

The following technical solution may further be used in the present invention: A automatic mower works in at least two separate working regions, the automatic mower includes a control module and a flight apparatus, the control module is electrically connected to the flight apparatus, and the control module controls the flight apparatus to drive the automatic mower to fly from one working region to another.

Preferably, the automatic mower further includes a positioning apparatus, the positioning apparatus is electrically connected to the control module, the positioning apparatus sends current position information of the automatic mower to the control module, the control module includes a storage unit, the storage unit is configured to store target position information, and the control module controls, according to the current position information and the target position information, the flight apparatus to drive the automatic mower to fly.

Preferably, the target position information includes position information of the at least two separate working regions.

Preferably, the automatic mower includes a communications module, the communications module is electrically connected to the control module, and the communications module communicates with an intelligent terminal to receive target position information sent by the intelligent terminal.

Preferably, the control module controls, by using the communications module, the automatic mower to pair with the intelligent terminal.

Preferably, the automatic mower further includes a transport platform, and the transport platform is configured to transport goods.

Preferably, the automatic mower further includes a walking apparatus, and the control module controls the walking apparatus to drive the automatic mower to walk.

Preferably, the flight apparatus includes a drive motor and a rotary wing assembly, the drive motor is connected to the rotary wing assembly, and the rotary wing assembly is driven by the drive motor to rotate.

Preferably, the flight apparatus is detachably connected to a housing of the automatic mower.

Preferably, the automatic mower further includes a battery pack, and the battery pack supplies energy for the automatic mower to work.

The following technical solution is also provided herein but not claimed: A automatic mower includes a mower body, a flight apparatus, a walking apparatus, a positioning apparatus, and a controller. The flight apparatus is mounted on the mower body. The walking apparatus is disposed below the mower body. The controller is respectively connected to the flight apparatus, the walking apparatus, and the positioning apparatus. The positioning apparatus is configured to: monitor a position of the mower body, and send the coordinates of the position to the controller, and the controller controls a movement trajectory of the flight apparatus or the walking apparatus according to the coordinates of the position and the coordinates of a preset target position.

Preferably, the flight apparatus includes a plurality of rotary wing assemblies, the plurality of rotary wing assemblies are disposed on the mower body, a rotary wing assembly includes a supporting arm, a propeller, and a motor, one end of the supporting arm is connected to the mower body, the motor is connect to the other end of the supporting arm, and the propeller is connected to the motor and is driven by the motor to rotate.

Preferably, there are four rotary wing assemblies, two rotary wing assemblies are respectively disposed on a left side and a right side of the mower body, and the four rotary wing assemblies are centrosymmetrically disposed with the gravity of the mower body as the center.

Preferably, the supporting arm is detachably connected to the mower body.

Preferably, the flight apparatus further includes a connecting member used to make the supporting arm fold relative to the mower body, and the connecting member is connected between the mower body and the supporting arm.

Preferably, the flight apparatus includes a mounting plate and a plurality of rotary wing assemblies, the mounting plate is disposed at the top of the mower body, the rotary wing assembly includes a connecting arm, a propeller, and a motor, one end of the connecting arm is connected to the mounting plate, the other end extends towards an outer side of the mounting plate, the connecting arms are centrosymmetrically disposed with the mounting plate as the center of symmetry and are all located in a same horizontal plane, the motor is connected to the other end of the connecting arm, and the propeller is connected to the motor.

Preferably, the flight apparatus further includes a connecting member used to make the connecting arm fold relative to the mower body, and the connecting member is connected to the mounting plate and the connecting arm.

Preferably, the flight apparatus includes a body propeller, a tail connecting arm, and a tail propeller, the body propeller is mounted at the top of the mower body, the tail connecting arm is mounted behind the mower body, the tail propeller is connected to the tail connecting arm, and a rotating direction of the tail propeller is opposite to a rotating direction of the body propeller.

Preferably, the automatic mower further includes a communications apparatus wirelessly connected to a remote control device, the communications apparatus is connected to the controller, the controller uses the communications apparatus to send state information of the automatic mower to the remote control device, and the remote control device sends a control instruction to the controller according to the state information and by using the communications apparatus.

Preferably, the control instruction includes the coordinates of the target position, and the controller controls, according to the coordinates of the target position, the automatic mower to arrive at the target position.

Preferably, the automatic mower further includes a battery assembly, and the battery assembly is configured to supply electrical power to the automatic mower.

The beneficial effect of the present invention is as follows: A movement mode of a self-moving device includes a walking mode and a flight mode, and the self-moving device may choose a suitable movement mode to change a position in a working region, thereby effectively resolving problems such as complex working regions or discontinuous working regions.

### BRIEF DESCRIPTION OF THE DRAWINGS

FIG. 1 is a partial sectional view when a battery assembly in a self-moving device is in a second connection state according to a first embodiment of the present disclosure which is not claimed;
FIG. 2 is a schematic structural diagram when the battery assembly in the self-moving device shown in FIG. 1 is in a first connection state, which is not claimed;
FIG. 3 is a schematic structural diagram when a battery assembly is in a first connection state according to a second embodiment, which is not claimed;
FIG. 4 is a schematic structural diagram when the battery assembly shown in FIG. 3 is in a second connection state, which is not claimed;
FIG. 5 is a schematic structural diagram when a battery assembly is in a second connection state according to a third embodiment, which is not claimed;
FIG. 6 is a schematic structural diagram when the battery assembly in FIG. 5 is in a first connection state, which is not claimed;
FIG. 7 is a schematic structural diagram when a battery assembly is in a second connection state according to a fourth embodiment, which is not claimed;
FIG. 8 is a schematic structural diagram when the battery assembly shown in FIG. 7 is in a first connection state, which is not claimed;
FIG. 9 is a diagram showing modules of a self-moving device according to a fifth embodiment of the present invention;
FIG. 10 is a front view of a self-moving device according to the fifth embodiment of the present invention;
FIG. 11 is a top view of the self-moving device shown in FIG. 10;
FIG. 12 is a top view when a flight module of a self-moving device has a mounting plate;
FIG. 13 is a top view when a flight module of a self-moving device includes a body propeller and a tail propeller;
FIG. 14 is a schematic diagram showing that a flight module is movable via rotation in a self-moving device according to a sixth embodiment of the present invention;
FIG. 15 is a front view when a self-moving device is in a walking mode according to the sixth embodiment of the present invention;
FIG. 16 is a top view of the self-moving device shown in FIG. 15;
FIG. 17 is a front view when a self-moving device is in a flight mode according to the sixth embodiment of the present invention;
FIG. 18 is a top view of the self-moving device shown in FIG. 17; and
FIG. 19 is a schematic diagram showing that a flight module is movable via a horizontal movement in a self-moving device according to the sixth embodiment of the present invention.

### DETAILED DESCRIPTION

To make the present invention more comprehensible, the present invention is described more comprehensively below with reference to related accompanying drawings. Preferred embodiments of the present invention are provided in the accompanying drawings. However, the present invention may be implemented in various forms, and is not limited to the embodiments described herein. In contrast, these embodiments are provided for more thorough and comprehensive understanding of disclosed content of the present invention.

For ease of understanding of the present invention, the present invention is described below in further detail with reference to the accompanying drawings and specific embodiments. It should be noted that when an element is "fixed" on another element, the element may be directly fixed on the other element or an intervening element may be present. When an element is "connected" to another element, the element may be directly connected to the other element or an intervening element may be present. The terms "vertical," "horizontal," "left," "right," and similar expressions used in this specification are only used to facilitate description.

Unless otherwise defined, all technical terms and scientific terms used herein have the same meaning as commonly understood by a person skilled in the art to which the present invention belongs. The terms used herein of the present invention are merely used to describe specific embodiments but are not used to limit the present invention. The term "and/or" used in this specification includes any or all combinations of one or more listed items.

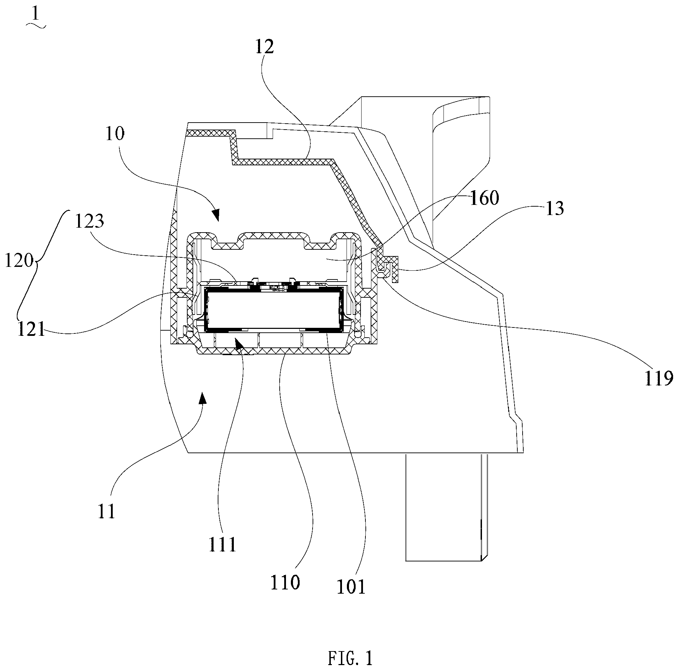

The first to fourth embodiments discussed herein and as shown in Figures 1 to 8 are not claimed herein.

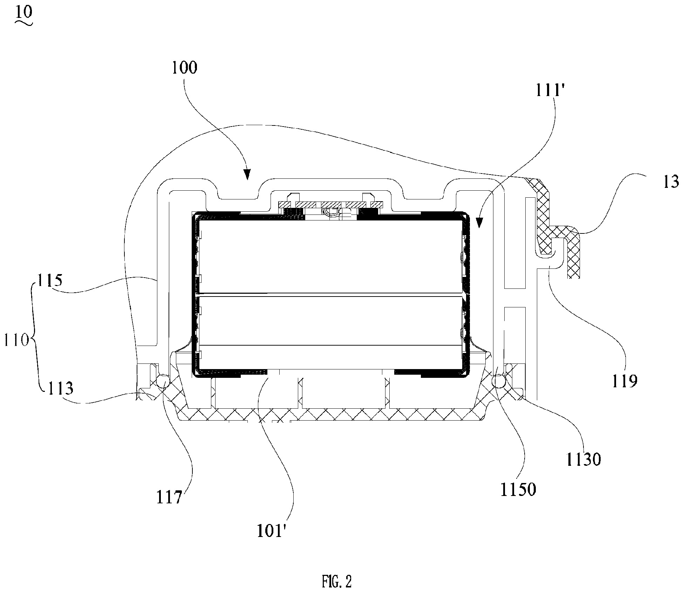

The present invention provides a self-moving device 1 moving and working in a defined working region. The self-moving device 1 includes an energy module supplying energy to the self-moving device and a battery mounting portion 100 used to accommodate the energy module. In this embodiment, the energy module of the self-moving device is a battery pack 101. In another embodiment, the energy module may be alternatively another form of energy module. In this embodiment, for example, the self-moving device 1 is a lawn mower. In another embodiment, the self-moving device may be alternatively an automatic leaf blower, an automatic water sprinkler, a multifunctional machine, an automatic vacuum cleaner or the like. In another embodiment, the self-moving device may be alternatively an ordinary electric tool, for example, a hand-operated lawn mower or a hand drill. As shown in FIG. 1 and FIG. 2, in a first embodiment of the present disclosure, the self-moving device 1 includes a self-moving device housing and the battery mounting portion 100 used to accommodate the battery pack 101. The battery mounting portion 100 includes a housing 110, an accommodating cavity 160 defined by the housing 110, a support 120 accommodated in the accommodating cavity 160, and a battery accommodating portion 111 located in the accommodating cavity 160 and used to accommodate the battery pack 101. Specifically, in an embodiment, the housing 110 may be a part of the self-moving device housing, or, a part of the self-moving device housing defines the housing. In another embodiment, the battery mounting portion 100 and the self-moving device housing are independent of each other. The battery pack 110 is accommodated in the battery mounting portion 100 to form a battery assembly 10. The self-moving device housing is provided with a battery holder 11, and the battery assembly 10 is accommodated and mounted in the battery holder 11.

The battery mounting portion 100 includes the housing 110, the accommodating cavity 160 defined by the housing 110, the support 120 accommodated in the accommodating cavity 160, and the battery accommodating portion 111 located in the accommodating cavity 160 and used to accommodate the battery pack 101. A connection relationship between the housing 110 and the support 120 at least includes two different connection states. The battery accommodating portion 111 has different volumes or sizes in the two different connection states, and preferably, different volumes. The size of the battery accommodating portion 111 is a size of an outermost contour of the battery accommodating portion 111. For example, when the battery accommodating portion 111 is a cuboid, the size of the battery accommodating portion 111 is the length, width, and height of the battery accommodating portion 111. Correspondingly, when the battery accommodating portion 111 has different sizes, the battery accommodating portion 111 is different in terms of at least one of length, width, and height. When the battery accommodating portion 111 has another shape, the size of the battery accommodating portion 111 is a size of a shape of the another corresponding shape. The housing 110 may be made of plastic, metal or another material. The battery pack 101 includes a plurality of batteries joined in series and/or parallel.

Specifically, in this embodiment, the support 120 is detachably accommodated in the housing 110. The housing 110 has the accommodating cavity 160, and the battery accommodating portion 111 used to mount a battery is formed in the accommodating cavity 160. Specifically, the battery pack 101 is detachably mounted in the battery accommodating portion 111. The housing 110 includes a bottom cover 113 and an inner housing 115. The bottom cover 113 and the inner housing 115 define the battery accommodating portion 111. A clamping groove 1130 is provided at an edge of the bottom cover 113. An annular protrusion1150 is provided at an edge of the inner housing 115. The annular protrusion 1150 is clamped at the clamping groove 1130 to fix the inner housing 115 at the bottom cover 113. Because the housing 110 includes two parts, the housing 110 may be opened. The annular protrusion 1150 is clamped into or pulled out from the clamping groove 1130 to rapidly open or assembled in the housing 110. Therefore, the battery pack 101 mounted in the battery accommodating portion 111 may be detached and replaced.

Further, in this embodiment, the housing 110 further includes an annular sealing strip 117. The annular sealing strip 117 is accommodated in the clamping groove, and is sandwiched between the bottom of the clamping groove and the annular protrusion. The annular sealing strip 117 may deform after being pressed and is filled in a gap between the bottom cover 113 and the inner housing 115, thereby improving the seal performance of the housing 110. Therefore, moisture may be prevented from entering the housing 110 to affect the service life of the battery pack 101.

In this embodiment, a fixing support 12 is disposed in the battery holder 11, a clamping portion 13 is disposed in the fixing support 12, and a fitting portion 119 is disposed on the housing 110. The clamping portion 13 is clamped at the fitting portion 119 to fix the battery assembly 10 in the battery holder 11. The clamping portion 13 and the fitting portion 119 may be elastic fasteners fitting each other, and may be easily clamped or separated. Therefore, when the battery assembly 10 needs to be detached, it is only necessary to separate the clamping portion 13 from the fitting portion 119, thereby effectively improving the efficiency of disassembling and assembling the battery assembly 10.

In the present disclosure, the connection relationship between the support 120 and the housing 110 at least includes two different connection states. Specifically, the two different connection states include a first connection state and a second connection state. In this embodiment, the volume of the battery accommodating portion 111' in the first connection state is different from the volume of the battery accommodating portion 111 in the second connection state. In another embodiment, the size of the battery accommodating portion 111' in the first connection state may be different from the size of the battery accommodating portion 111 in the second connection state. The support 120 is adjusted to switch the connection relationship between the support 120 and the housing 110 between the first connection state and the second connection state, so that the volume and/or size of the battery accommodating portion 111 may be adjusted. When a user needs to replace an old battery pack with a new battery pack but the new battery pack has a different volume or size because the capacity or brand of the battery pack is different or the battery pack is from a different batch, the original battery accommodating portion 111 with a fixed volume and size cannot satisfy the user's requirement. Such a problem can be resolved by using the battery accommodating portion with an adjustable volume and size in the present disclosure. For example, when the user needs to change the capacity of the battery pack 101 by increasing or decreasing the number of batteries in the battery pack 101 without changing the capacity of a single battery, the volume of the battery pack correspondingly increases or decreases. The original battery accommodating portion 111 has a fixed volume and size. As a result, when the battery pack 101 is larger, the battery accommodating portion 111 cannot accommodate the larger battery pack. When the battery pack is smaller, the battery accommodating portion 111 cannot fix the smaller battery pack, and the smaller battery pack shakes in the battery accommodating portion 111. In the present disclosure, the battery accommodating portion has an adjustable volume and size. When a battery pack has a larger volume, the volume of the corresponding battery accommodating portion is correspondingly increased. When a battery pack has a smaller volume, the volume of the corresponding battery accommodating portion is correspondingly decreased. The user may change the battery pack independently without being restricted by the size of a battery pack.

Specifically, in this embodiment, as shown in FIG. 2, the connection relationship between the support 120 and the housing 110 is in the first connection state. In the first connection state, the support 120 is separate from the housing 110 and is located outside the accommodating cavity 160. The housing 110 defines the battery pack accommodating portion 111' in the first connection state. As shown in FIG. 1, the connection relationship between the support 120 and the housing 110 is in the second connection state. In the second connection state, the support 120 is detachably mounted in the accommodating cavity 160 and divides the accommodating cavity 160 into at least two parts. The support 120 and a side of the housing 110 together define the battery accommodating portion 111 in the second connection state. In this embodiment, the support 120 and the bottom cover 113 of the housing 110 together define the battery accommodating portion 111 in the second connection state. The support 120 is fixed in the housing. Preferably, the support 120 is supported at the bottom of the interior of the inner housing of the housing 110, so as to prevent the support 120 from shaking in the accommodating cavity 160. The battery pack 101 is accommodated in the battery accommodating portion 111. To be specific, the battery pack 101 is accommodated between the bottom cover 113 and the support 120. In another embodiment, the support 120 and another side of the housing 110, for example, the bottom of the inner housing 115, or one of two side walls, may define the battery accommodating portion 111 in a second state. To be specific, the battery pack 101 is accommodated between the support 120 and the bottom of the inner housing 115 or one of the two side walls. The volume of the battery accommodating portion 111' in the first connection state is greater than the volume of the battery accommodating portion 111 in the second connection state. The volume of the battery pack 101' in the first connection state is also greater than the volume of the battery pack 101 in the second connection state.

Specifically, when the support 120 is detachably mounted in the accommodating cavity 160, the support 120 and the housing 110 are in the second connection state. In this case, the support 120 divides the accommodating cavity 160 into at least two parts. The battery pack 101 is fixed between the support 120 and the bottom of the accommodating cavity 160. When the capacity of the battery pack 101 needs to be expanded, the support 120 is detached and removed from the accommodating cavity 160, to enable the support 120 and the housing 110 to be in the first connection state. In this case, the battery accommodating portion 111' has a volume of the entire accommodating cavity 160, so that a battery pack 101' with a larger volume may be loaded and contained. For example, the number of batteries in the battery pack 101 is increased. For example, 1P battery packs are replaced with 2P battery packs to increase the capacity of the battery pack 101. Alternatively, when the type or brand of a battery pack is changed, for example, a 18650 battery is replaced with a 21700 battery, and the volume of the battery pack 101 is increased. Certainly, the foregoing connection forms of the batteries in the battery pack 101 or the types of the batteries in the battery pack 101 are only examples, and more battery types or brands or connection forms may be used along with the developments in the future.

In this embodiment, the support 120 includes a support plate 123 used to support the battery pack 101 and a limiting wall 121 located around the support plate 123 and used to limit the battery pack 101. The support plate 123, the limiting wall 121, and a side of the housing 110 define the battery accommodating portion 111. A limiting wall may be not disposed at the support 120. Certainly, the limiting wall 121 is preferably disposed. The limiting wall 121 may be disposed at four walls around the support plate 123 or may be disposed at only four corners around the support plate 123. Certainly, the support plate 123 may be alternatively disposed at one to three walls around the support plate 123, or is disposed at one to three corners of the four corners of the support plate 123. Specifically, the form of the support plate 123 may be determined according to an actual case, provided that a limiting effect is produced on the battery pack 101. Specifically, as shown in FIG. 1, a cross section of the support 120 has an "H" shape. When the battery pack 101 is mounted at the battery mounting portion 111, the battery pack 101 is located between two limiting walls 121. Preferably, the two limiting walls 121 are disposed perpendicular to the support plate 123. The limiting wall 121 may produce a relatively desirable limiting effect on the battery pack 101, thereby preventing the battery pack 101 from shaking in the housing 110.

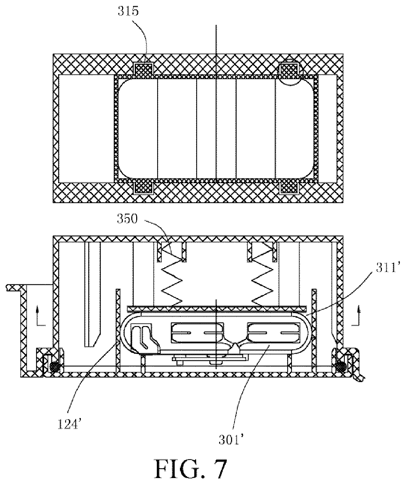

In an optimal embodiment, the support plate 123 is parallel to a side of the housing 110. Preferably, the support plate 123 is parallel to the bottom cover 113, and the support plate 123, the limiting wall 121, and the bottom cover 113 define the battery accommodating portion 111. In another embodiment, as shown in FIG. 7, the limiting wall 121 may be disposed on the bottom cover 113, and the limiting wall 121, the bottom cover 113, and the support plate 123 define the battery accommodating portion 111.

Further, in this embodiment, an electrode clearance (not shown) is provided in the support plate 123. In the second connection state, an electrode of the battery pack 101 may be easily guided out via the electrode clearance, so that the structure of the housing 110 does not need to be changed during the switching from the first connection state to the second connection state.

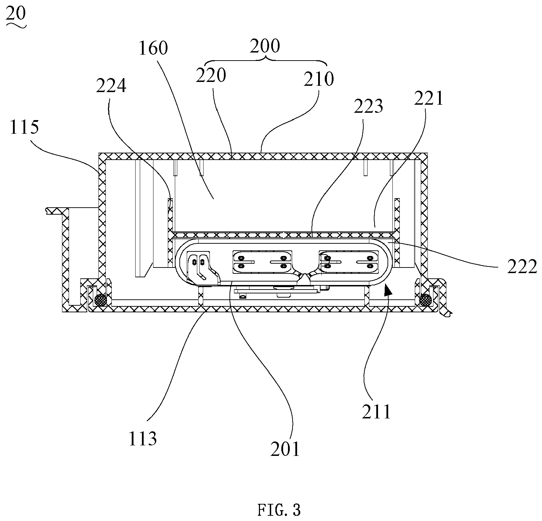

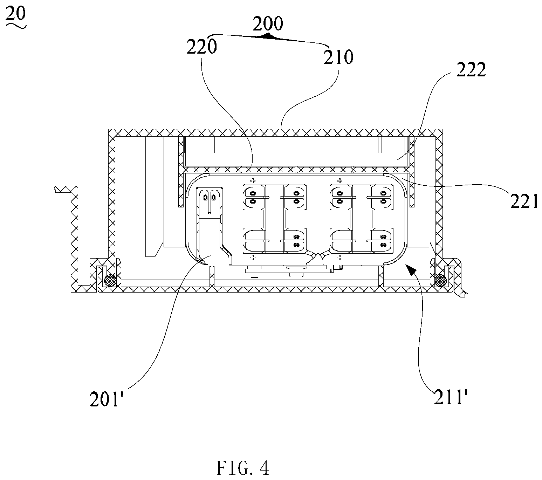

FIG. 3 and FIG. 4 show a second embodiment of the present disclosure. The second embodiment of the present disclosure is different from the first embodiment only in the manners of implementing different connection states and a presented connection state. In the first embodiment, the support is detached and loaded to implement switching of connection states. In this embodiment, a mounting position of a support 220 is adjusted to implement switching of connection states. In this embodiment, the self-moving device includes a battery assembly 20. The remaining structure of the self-moving device in this embodiment is the same as that of the self-moving device in the previous embodiment, and therefore details are not described herein again. The battery assembly 20 includes a battery mounting portion 200 and a battery pack 201. The battery mounting portion 200 includes a housing 210 and the support 220. The structure and shape of the housing 210 and the support 220 are the same as or similar to those of the housing 110 and the support 120 in the previous embodiment, and therefore details are not described herein again.

The support 220 is accommodated in the accommodating cavity 160. In both a first connection state and a second connection state, the support 220 is accommodated in the accommodating cavity 160 and divides the accommodating cavity 160 into at least two parts. In the first connection state, the support 220 and a side of the housing 110 define a battery accommodating portion 211 in the first connection state. In the second connection state, the support and a side of the housing define the battery accommodating portion in the second connection state. A volume of the battery accommodating portion in the first connection state is different from a volume of the battery accommodating portion in the second connection state.

Specifically, the support 220 includes a front surface 221 and a rear surface 222 that are opposite. As shown in FIG. 3, in the first connection state, the front surface 221 of the support 220 faces the interior of the housing 210, and the support 220 and a side of the housing 210 define the battery accommodating portion 211 in the first connection state. In this example, the support 220 and the bottom cover 113 define the battery accommodating portion 211 in the first connection state. In this case, the battery pack 201 is accommodated in the battery accommodating portion 211. As shown in FIG. 4, in the second connection state, the rear surface 222 of the support 220 faces the interior of the housing 210, and the support 220 and a side of the housing 210 define the battery accommodating portion 211 in the first connection state. In this embodiment, the support 220 and the bottom cover 113 define the battery accommodating portion 211 in the first connection state. In this case, a battery pack 201' is accommodated in the battery accommodating portion 211'. In this embodiment, a volume of the battery accommodating portion 211 in the first connection state is different from a volume the battery accommodating portion 211' in a second connection state, and a volume of the battery pack 201 in the first connection state is also different from a volume of the battery pack 201' in the second connection state. In another embodiment, the battery accommodating portion 211 in the first connection state and the battery accommodating portion 211' in the second connection state may have different sizes, and correspondingly, a size of the battery pack 201 in the first connection state is also different from a size of the battery pack 201' in the second connection state.

In this embodiment, the support 220 is supported at the bottom of the interior of the housing 210 to prevent the support 220 from shaking in the accommodating cavity 160. In another embodiment, the support 220 may be supported on any other side of the housing 210, provided that an effect of supporting the support 220 is produced. In this embodiment, the support 220 includes a support plate 223 supporting the battery pack 201 and a limiting wall 224 located around the support plate 223. The limiting wall 224 is the same as that in the first embodiment, and may be disposed at four walls around the support plate 223, or may be disposed at four corners around the support plate 223, or disposed at some of the four walls or four corners, so as to produce a limiting effect on the battery pack 201 to prevent the battery pack 201 from shaking in a horizontal direction. In an optimal embodiment, several limiting walls 224 are disposed on both the front surface 221 and the rear surface 222 of the support 220. The limiting wall 224 prevents the battery pack 201 from shaking in the horizontal direction, and may also be used as a support leg used to support the support 220, so as to support the support plate 223 of the support 220 at the bottom of the interior of the inner housing 115 of the housing 210, thereby preventing the support from shaking in a vertical direction. Specifically, in this embodiment, a distance between a support 220 and the bottom cover 113 in the first connection state may be different from a distance between the support 220 and the bottom cover 113 in the second connection state, so that the volume or size of the battery accommodating portion 211 in the first connection state is different from the volume or size of the battery accommodating portion 211' in a second state. Alternatively, the position of the limiting wall 224 may be adjusted to achieve different volumes or sizes. Certainly, other parameters related to the battery accommodating portion 211 may be adjusted to achieve different volumes or sizes.

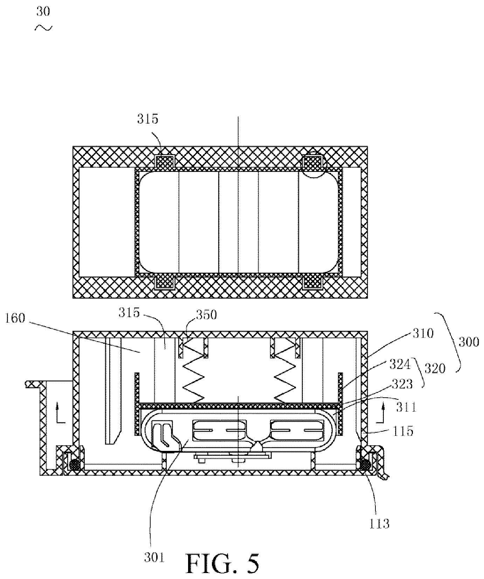

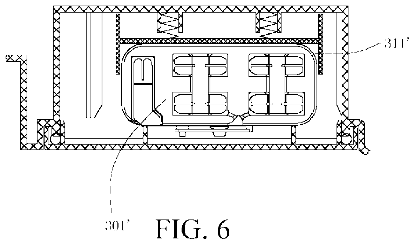

FIG. 5 and FIG. 6 show a third embodiment of the present disclosure. This embodiment is different from the first embodiment and the second embodiment of the present disclosure in that a support 320 in this embodiment is movable, so that as the support 320 moves, a connection manner between the support 320 and a housing 310 at least includes two different states. In this embodiment, the support 320 may be detachably accommodated in the accommodating cavity or may be nondetachably accommodated in the accommodating cavity 160, provided that the support 320 is movable in the accommodating cavity. The remaining structure of the self-moving device in this embodiment is the same as the self-moving device in the previous embodiment, and therefore details are not described herein again. A battery assembly 30 includes a battery mounting portion 300 and a battery pack 301. The battery mounting portion 300 includes the housing 310 and the support 320. The structure and shape of the housing 310 and the support 320 are the same as or similar to those of the housing 110 and the support 120 in the first embodiment, and therefore details are not described herein again.

As shown in FIG. 5, the support 320 is movably accommodated in the accommodating cavity 160 and divides the accommodating cavity 160 into at least two parts. Specifically, the support 320 is movable in the accommodating cavity, and the support 320 and a side of the housing 310 form a battery accommodating portion 311. The support 320 is movable to at least two different connection states. Specifically, the support 320 is movable to a first connection state and a second connection state different from the first connection state. In this embodiment, FIG. 6 shows the first connection state, and FIG. 5 shows the second connection state. A volume of the battery accommodating portion 311 in the first connection state shown in FIG. 6 is different from a volume of the battery accommodating portion 311' in the second connection state shown in FIG. 5, so as to accommodate battery packs 301 having different volumes. Specifically, a volume of the battery pack 301 in the first connection state is different from a volume of a battery pack 301' in the second connection state. A distance between the support 320 and the bottom of the interior of the inner housing 115 of the housing 310 in the first connection state is less than a distance between the support 220 and the bottom of the interior of the inner housing 115 of the housing 310 in the second connection state. To be specific, a distance between the support 320 and the bottom cover 113 in the first connection state is greater than a distance between the support 220 and the bottom cover 113 in the second connection state. Certainly, in another embodiment, only a size of the battery accommodating portion 311 in the first connection state may be different from a size of the battery accommodating portion 311 in the second connection state, so as to accommodate the battery packs 301 having different sizes. Specifically, a size of the battery pack 301 in the first connection state is different from a size of the battery pack 301' in the second connection state.

In this embodiment, the battery mounting portion 300 includes an elastic component 350. The elastic component 350 is used to connect the support 320 and the housing 310. The support 320 and a side, away from the elastic component 350, of the housing 310 define the battery accommodating portion 311. The housing 310 includes a guiderail 315. The support 320 moves along the guiderail 315. The bottom of the elastic component 350 is fixed at the bottom of the interior of the inner housing 115 of the housing 310. As the support 320 moves, a deformation of the elastic component 350 changes correspondingly, the elastic component 350 is compressed, and a restoring force supports the support 320, so as to prevent the support 320 from shaking in the vertical direction. When being loaded into the battery accommodating portion 311, the battery pack 301 presses the support 320 inwardly, the support 320 moves towards the interior of the inner housing until the battery pack 301 is completely loaded into the housing 310, and the bottom cover 113 is covered. The bottom cover 113 and the elastic component 350 limit the battery pack and the support 310 in the vertical direction to prevent the battery pack and the support 310 from shaking. The battery packs 301 having different sizes compress the elastic component 350 by different degrees, and the size of the battery accommodating portion 311 may be adjusted according to the size of the battery pack 301, so that the support 320 and the housing 310 may present different connection states, for example, present the first connection state shown in FIG. 6 and the second connection state shown in FIG. 5.

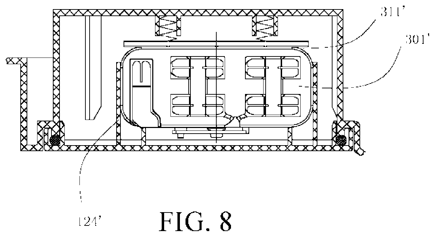

FIG. 7 and FIG. 8 show a fourth embodiment of the present disclosure. This embodiment is different from the third embodiment only in that a limiting wall 124' for limiting the battery pack 301 is disposed in the bottom cover 113. In such a design, only a support plate 323 may be included on the support 320, and the limiting wall may be omitted.

In the present disclosure, a connection state between a support and a housing is adjusted to switch a connection relationship between the support and the housing between a first connection state and a second connection state, so that a volume and/or size of a battery accommodating portion may be adjusted. Therefore, when a user needs to change a battery pack, there is no longer restriction in terms of the volume or size of the battery accommodating portion. During replacement of battery packs having different volumes or sizes, a battery accommodating container in the present disclosure is still applicable, thereby saving the user from restriction in terms of a volume and size of a battery accommodating container during matching of a conventional battery accommodating container. For example, when a battery pack needs to be replaced with a battery pack with different capacity, without changing the capacity of a single battery in the battery pack, the number of batteries included in the battery pack may be directly increased or decreased, that is, the volume of the battery pack may be increased to implement replacement, and it is not necessary to use a new battery mounting portion.

The technical features in the foregoing embodiments may be randomly combined. For simplicity of description, all possible combinations of the technical features in the foregoing embodiments are not described. However, it should be considered that these combinations of technical features fall within the scope recorded in the specification provided that these combinations of technical features do not have any conflict.

The foregoing embodiments only describe several implementations of the present disclosure, and their description is specific and detailed, but cannot therefore be understood as a limitation to the patent scope of the present invention. It should be noted that a person of ordinary skill in the art may further make variations and improvements without departing from the conception of embodiments of the present invention, and these all fall within the protection scope of embodiments of the present invention. Therefore, the patent protection scope of embodiments of the present invention should be subject to the appended claims.

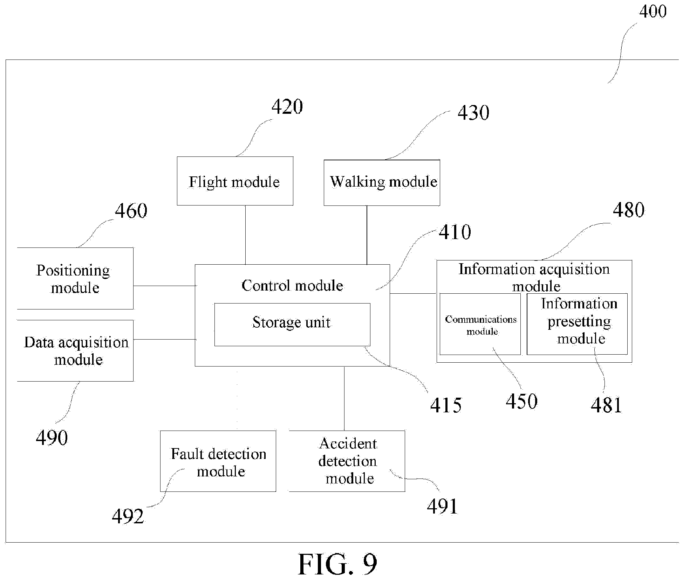

FIG. 9 to FIG. 13 show a fifth embodiment of the present invention. A self-moving device 400 moves and works in a defined working region. In this embodiment, for example, the self-moving device is an automatic mower. In another embodiment, the self-moving device 400 may be alternatively an automatic leaf blower, an automatic water sprinkler, a multifunctional machine, an automatic vacuum cleaner or the like. As shown in FIG. 9 to FIG. 13, the self-moving device 400 includes a body 40 and a walking module 430 and a flight module 420 that are disposed on the body 40. A movement mode of the self-moving device 400 includes a walking mode and a flight mode. That is, the self-moving device 400 may change a position of the self-moving device 400 in the walking mode or the flight mode. In the walking mode, the walking module 430 is configured to drive the self-moving device 400 to walk and work in a continuous working region. In the flight mode, the flight module 420 is configured to drive the self-moving device 400 to fly between discontinuous working regions. In the flight mode, the flight module 420 can change the position of the self-moving device 400 between discontinuous working regions. The discontinuous working regions denote that the working regions at least include two discontinuous positions. For example, the working regions include at least two sub-regions that are separate from each other, for example, separate yards, for example, a front yard and a back yard of a user's house. Specifically, the front yard and back yard of the user's house may be completely separate or may be only partially or mostly separate but may still be connected via a passage. For example, the passage is a narrow passage, a passage that needs to pass through the user's house or another passage in which it is not convenient for the self-moving device to pass through. Alternatively, the working regions are at least two sub-regions separated from each other by an obstacle, for example, a partition such as flowers, a road, and a fence. Alternatively, the working regions include discontinuous sub-regions such as steps or discontinuous layers, for example, discontinuous slopes. Alternatively, a working region with a relatively large area is manually divided into a plurality of discontinuous sub-regions with relatively small areas. In the flight mode, the flight module 420 can change a position between discontinuous working regions. When the self-moving device 400 encounters discontinuous working regions and cannot change the position between discontinuous working regions by using the walking mode, the position may be changed by using the flight mode, thereby effectively resolving a problem that continuous grass cutting cannot be implemented in discontinuous working regions such as the user's front yard and back yard or discontinuous slopes. Certainly, according to the user's requirement, the flight module 420 may drive the self-moving device 400 to move between two discontinuous positions in a continuous working region, so as to change the position.

The self-moving device 400 further includes a control module 410. The control module 410 is configured to control the self-moving device 400 to move and work. To ensure the safety of the flight mode of the self-moving device 400, in a specific embodiment, the weight of the self-moving device 400 is not greater than 25 kg, and a flight height is restricted to be below 122 meters. Preferably, the weight of the self-moving device 400 is not greater than 7 kg, and the flight height is below 120 meters. In an optimal embodiment, the weight of the self-moving device 400 is less than 7 kg, and the flight height is below 91 meters. Specifically, the control module 410 may control the movement mode of the self-moving device 400. To be specific, the control module 410 controls the self-moving device 400 to choose the walking mode or the flight mode to change the position of the self-moving device 400. The control module 410 may also control a specific solution after the self-moving device 400 chooses a corresponding movement mode, for example, flight duration, a flight trajectory, a flight region, and the like after the flight mode is chosen. Specifically, the self-moving device 400 works in discontinuous working regions, the control module 410 is electrically connected to the flight module 420, and the control module 410 controls the flight module 420 to drive the self-moving device 400 to fly from one of at least two separate or discontinuous sub-regions to another. Certainly, the control module 410 may alternatively control the flight module 420 to drive the self-moving device 400 to move between two discontinuous positions in a continuous working region. When the self-moving device 400 finishes grass cutting in a sub-region of a working region and needs to reach another sub-region, the control module 410 controls the flight module 420 to fly, so that the flight module 420 drives the self-moving device to fly to the another sub-region.

Specifically, the self-moving device 400 further includes a walking module 430 and a cutting module 470. The control module 410 controls the walking module 430 to drive the self-moving device 400 to walk and work. The walking module 430 and the cutting module 470 are respectively electrically connected to the control module 410. When the self-moving device 400 works in a continuous working region, the control module 410 controls the walking module 430 to drive the self-moving device 400 to walk in the continuous working region to change a position. The control module 410 may control the self-moving device 400 as required to walk in a walking mode and simultaneously perform grass cutting work.

Specifically, the self-moving device 400 further includes an information acquisition module 480 configured to obtain related information. The control module 410 controls the movement mode of the self-moving device 400 according to the related information obtained by the information acquisition module 480. The related information includes information such as a timetable for executing each mode of the self-moving device 400, a starting point and an end point of movement of the self-moving device 400, a movement path, regions in which the walking mode is chosen, regions in which the flight mode is chosen, the battery power of the self-moving device 400, and a map of a working region. The foregoing is only an example for description. The related information is not limited to the foregoing information. Any information that is related to the self-moving device 400 and can affect decision making of the control module 410 is referred to as the related information.

In a specific embodiment, the information acquisition module 480 includes an information presetting module 481 configured to preset related information. The control module 410 controls the movement mode of the self-moving device 400 according to the preset related information.

Specifically, the information presetting module 481 may preset the timetable of the self-moving device 400. The control module 410 controls the movement mode of the self-moving device 1 according to the timetable. For example, according to the timetable, the self-moving device 400 is arranged to execute the flight mode to fly from a front yard to a back yard of a user or fly from a user A's house to a user B's house when there are a few people, for example, at 6 am every morning, and is arranged to execute the walking mode after 6:30 am and perform a grass cutting task in the walking mode. In another specific embodiment, the self-moving device 400 further includes a positioning module 460 configured to obtain current position information of the self-moving device 400. The positioning module 460 is electrically connected to the control module 410. The positioning module 460 sends the current position information of the self-moving device 400 to the control module 410. The control module 410 controls a flight trajectory of the self-moving device 400 according to the current position information. Specifically, the positioning module 460 is configured to: monitor a current position of the self-moving device 400, and send information about the coordinates of the current position to the control module 410. In an embodiment, the positioning module 460 uses a global positioning system (GPS) module. The GPS module is electrically connected to the control module 410. The GPS module monitors and obtains the coordinates of the current position of the self-moving device, and sends the coordinates of the position of the self-moving device to the control module 410. Specifically, the GPS module may be a differential GPS (DGPS) module. Specifically, in this embodiment, the information presetting module 481 may preset information such as position information or a movement path of the self-moving device 400. For example, the information presetting module 481 presets target position information. The control module 410 controls a walking trajectory or flight trajectory of the self-moving device 400 according to the current position information and the target position information. Specifically, in this embodiment, the information presetting module 481 may further preset a walking path or flight path of the self-moving device 400. The control module 410 controls the walking trajectory or flight trajectory of the self-moving device 400 according to the current position information, the preset target position information, and the walking path or the flight path.

Specifically, in an embodiment, the control module 410 includes a storage unit 415. The storage unit 415 is configured to store the related information prestored in an information presetting module 481, for example, store the target position information, the flight path or the like. The control module 410 controls the movement mode of the self-moving device 400 according to the related information stored in the storage unit 415. Specifically, in this embodiment, the target position information includes position information of the at least two separate working regions. The target position information is stored in the storage unit 415 of the control module 410. The target position information includes position information of all working regions in which the self-moving device works. The position information includes boundary coordinate information of a region boundary of each working region and coordinate information of takeoff and landing points of the self-moving device 400 in each working region.

Specifically, the control module 410 controls the walking trajectory of the walking module 430 or the flight trajectory of the flight module 420 according to the coordinates of the position of the self-moving device 400 monitored by the positioning module 460 and the target position information stored in the storage unit 415. The control module 410 receives the coordinates of the current position sent by the positioning module 460, obtains stored coordinate position information of a current working region of the self-moving device 400, and compares the coordinates of the current position with the stored coordinates of the position of the working region. When the control module 410 determines that the self-moving device reaches a boundary of the current working region, the control module 410 controls the walking module 430 steers and continues to perform grass cutting work.

In this embodiment, the control module 410 performs grass cutting work of the self-moving device and fully-automatic control operations of walking and flight by using the coordinates of the monitored current position of the self-moving device and the prestored coordinate position information a target working region without manual intervention, thereby improving working efficiency of the self-moving device and saving labor costs.

Specifically, the storage unit 415 further stores a preset working time of the self-moving device in each working region, and the control module 410 further includes a timer. The control module 410 uses the timer to obtain a working time of the self-moving device in the current working region. After the self-moving device has worked in a same working region for the preset working time, the self-moving device needs to move to a next working region to work. The control module 410 obtains the coordinates of the position of a landing point in a next target working region and controls the flight module 420 to drive the self-moving device 400 to take off and fly. When the positioning module 460 monitors that the self-moving device reaches a landing point in the target working region, the control module 410 controls the flight module 420 to drive the self-moving device to land. After the self-moving device has landed, the control module 410 controls the walking module 430 to drive the self-moving device to walk, to enable the self-moving device to continue to travel in the next target working region and perform grass cutting work.

In another specific embodiment, the information acquisition module 480 includes a communications module 450, the communications module 450 is electrically connected to the control module 410, and the communications module 450 communicates with an intelligent terminal to receive related information sent by the intelligent terminal. The control module 410 controls, according to the related information sent by the intelligent terminal, the self-moving device 400 to move and work. Specifically, the control module 410 may first control the movement mode of the self-moving device 400 according to the related information sent by the intelligent terminal, and then determine, according to the related information, a specific solution used when the self-moving device 400 uses the corresponding movement mode. For example, the control module 410 first chooses, according to the related information, to execute the flight mode at 6 am, and then determines, according to the related information, a flight trajectory, a flight speed, a flight height, a flight region, and the like of the flight mode. For another example, the control module 410 first chooses, according to the related information, that currently the walking mode needs to be executed, then determines, according to the related information, whether grass needs to be synchronously cut in the walking mode, and then determines a walking path and the like according to the related information.

Specifically, the communications module 450 receives target position information sent by the intelligent terminal. The communications module 450 is configured to implement communication between a user and the self-moving device, to enable the user to remotely control the self-moving device. The self-moving device 400 may send information such as the coordinates of the position, the battery power, and a working state of the self-moving device 400 to the user by using the communications module 450, and the user may send a control instruction to a controller of a lawn mower by using the communications module 450. In an embodiment, the control module 410 uses the communications module 450 to control the self-moving device to pair with the intelligent terminal. The communications module 450 is turned on. The control module 410 uses the communications module 450 to search for an intelligent terminal device, enables the self-moving device 400 to be found, performs a pairing action with the intelligent terminal, and establishes a connection with the intelligent terminal after pairing succeeds. Specifically, the communications module 450 may use a 2G/3G/4G/5G module, Bluetooth, Wi-Fi, radio or the like.

The control module 410 sends state information of the self-moving device 400 to the intelligent terminal by using the communications module 450, and the intelligent terminal sends a control instruction to the control module 410 according to the state information by using the communications module 450. In an embodiment, the control instruction includes the coordinates of the target position, and the control module 410 controls the self-moving device according to the coordinates of the target position to reach the target position. A user may view the position of the self-moving device by using the communications module 450, and the user may enter the coordinates of the target position into the communications module 450. The communications module 450 sends the coordinates of the target position to the control module 410, and the control module 410 controls a movement trajectory of the flight module 420 or the walking module 430 according to the coordinates of the target position to enable the self-moving device 400 to reach the target position. Alternatively, the control module 410 may directly use the communications module 450 to obtain a movement path such as a corresponding walking path or flight path sent by the intelligent terminal. The control module 410 controls the walking trajectory or the flight trajectory of the self-moving device 400 according to the movement path to enable the self-moving device 400 to reach the target position according to a specified movement trajectory. In an embodiment, the user may enter a grass cutting instruction into the communications module 450 to control the self-moving device to perform cutting work. In this way, the user may remotely view and remotely control the self-moving device by using the communications module 450.

In this embodiment, the communications module 450 is used by the intelligent terminal to remotely control the self-moving device 400, and the user may view a working state and various performance indicators of the self-moving device, and send a working control instruction to the self-moving device according to a specific working requirement, so that it is convenient for the user to understand in real time a working status of the self-moving device and is convenient for the user to remotely control and operate the self-moving device in a comprehensive manner.

For the self-moving device in the foregoing embodiments, when the self-moving device 400 needs to work in at least two separate working regions, the self-moving device 400 may use the control module 410 to control the flight module to work to drive the self-moving device 400 to fly from one sub-region to another, so that the self-moving device 400 can be transferred fast, thereby improving working efficiency. As the self-moving device 400 is transferred between the working regions, the self-moving device 400 does not need to move or does not need to be manually carried on the road or ground that separates the two regions, so as to avoid loss that occurs when the self-moving device moves on the ground, thereby saving labor.

Specifically, in an embodiment, the self-moving device 400 further includes a data acquisition module 490. The data acquisition module 490 is configured to acquire environment information of the self-moving device 400. The control module 410 controls, according to the environment information, the self-moving device 400 to move and work. Specifically, in the flight mode, the control module 410 controls a flight trajectory of the self-moving device 400 according to the environment information. Specifically, in the flight mode, the data acquisition module 490 includes an image acquisition module, a laser radar or another module that can detect whether an abnormal object exists around the self-moving device 400. The image acquisition module is a module such as a camera that can obtain image information. In the flight mode, the data acquisition module 490 is configured to: acquire whether an abnormal object exists in front of or below the self-moving device 400, and obtain a determining result, where the control module 410 controls the flight trajectory of the self-moving device according to the determining result. The abnormal object is a human, livestock, a pool, a factory, a building or the like. Specifically, the self-moving device 400 may automatically connect to a backend map server, and automatically change the flight trajectory of the self-moving device and adjust a flight height of the self-moving device according to surrounding environment information acquired by the data acquisition module 490. Specifically, the self-moving device 400 further includes an alarm apparatus, for example, a warning lamp or an alarm. When the data acquisition module 490 acquires that there is a pedestrian in front of or below the self-moving device 400, the alarm apparatus is turned on. For example, the warning lamp flashes or the alarm sounds to alert the pedestrian and a user of the self-moving device 400. Certainly, to draw the pedestrian's attention, in the flight mode of the self-moving device 400, the control module 410 may control the warning lamp of the self-moving device 400 to keep flashing to alert the pedestrian.

Specifically, in an embodiment, the self-moving device 400 further includes an accident detection module 491. The accident detection module 491 is configured to detect whether a flight hindrance occurs for the self-moving device 400. When the accident detection module 491 detects that a flight hindrance occurs for the self-moving device 400, the control module 410 controls the self-moving device to actively stop. The flight hindrance is, for example, bad weather such as heavy wind, rain or snow that is not suitable for a flight or insufficient energy of an energy module that powers the self-moving device 400. For example, when the self-moving device 400 is electrically power, the power is insufficient and cannot support further flight of the self-moving device 400. The foregoing flight hindrances are only examples. Specifically, any hindrance that hinders the flight of the self-moving device 400 or makes it impossible for the self-moving device 400 to continue flying is a flight hindrance. Generally, when the self-moving device 400 encounters a flight hindrance, the self-moving device 400 further has an active stop capability, or in other words, a safe landing capability. It may be risky for the self-moving device 400 to continue to fly. Specifically, the accident detection module 491 is configured to detect whether the weather or the energy of the self-moving device 400 satisfies a condition to continue with the flight. If the weather or the energy does not satisfy a flight condition of the self-moving device, the control module 410 controls the self-moving device 400 to actively stop. Specifically, when the control module 410 controls the self-moving device 400 to actively stop, the control module 410 controls the self-moving device 400 to choose a nearby flat place to land and obtains current position information of the self-moving device 400 by using the positioning module. After landing, the self-moving device 400 uses the communications module 450 to send the current position information of the self-moving device 400 to a server or an intelligent terminal or another available means of a use to facilitate search by a user. Specifically, the self-moving device 400 further includes an alarm module. If the weather or energy does not satisfy the flight condition of the self-moving device 400, the control module 410 controls the alarm module to send alarm information. For example, the warning lamp flashes or the alarm sounds or the alarm information is sent to a user terminal.

Specifically, in another embodiment, the self-moving device 400 further includes a fault detection module 492. The fault detection module 492 is configured to detect whether the self-moving device 400 encounters a fault. If the self-moving device 400 encounters a fault, the control module 410 controls the self-moving device 400 to passively stop. Regarding the fault, the self-moving device 400 collides with a bird or crashes to cause a fractured blade or encounters a mechanical fault, a circuit fault or the like, and consequently the self-moving device 400 cannot continue to fly and the self-moving device 400 cannot make a safe landing. Specifically, when the fault detection module 492 detects that the self-moving device 400 encounters a fault, the control module 410 controls the self-moving device 400 to passively stop. The self-moving device 400 includes a positioning module for obtaining current position information of the self-moving device and an alarm module. After landing, the self-moving device sends the current position information of the self-moving device 400 to a server or a user terminal, and turns on the alarm module to send alarm information. Specifically, the self-moving device 400 further includes a protection module. When the self-moving device 400 passively stops, the control module 410 controls the protection module to start. Specifically, the protection module includes an airbag and a parachute. When the self-moving device 400 passively stops, the control module 410 controls the self-moving device 400 to cut off the energy module supplying energy to the self-moving device, for example, to cut off the electric power, fuel or the like to prevent a danger such as an explosion. The airbag is deployed at the same time to wrap the entire self-moving device 400 to reduce the damage of the self-moving device 400 when hitting the ground or the damage of an object being hit. If the self-moving device 400 is at a height exceeding a preset value, the parachute is further controlled to deploy to assist in speed reduction. In a specific embodiment, the turning on the protection module further includes retracting the flight module 420, for example, a rotary wing assembly 421, so as to prevent the protruding rotary wing assembly 421 from hitting a human or an object.

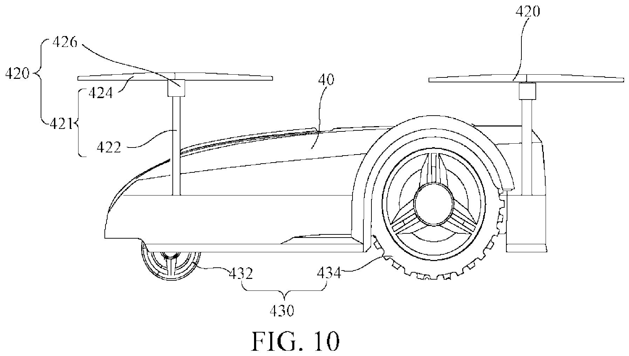

Specifically, the specific structure and form of the self-moving device 400 may be determined according to an actual case. Specifically, as shown in FIG. 10 to FIG. 13, the walking module 430 includes a steering wheel 432 and a drive wheel 434. The steering wheel 432 and the drive wheel 434 are mounted below the body 40 of the self-moving device. In this embodiment, two steering wheels 432 are mounted in the front of the body 40, two drive wheels 434 are mounted in the rear of the body 40, and an anti-slip boss is disposed on a circumferential surface of the drive wheel 434. The walking module 430 further includes a drive motor. The drive motor is disposed inside the body 40. Each drive wheel 434 and the steering wheel 432 are configured with one drive motor. Each drive motor is connected to the control module 410. The drive motors are controlled by the control module 410 and drive the drive wheel 434 and the steering wheel 432 to rotate, so that the self-moving device travels in an advancing direction.

Specifically, the self-moving device 400 further includes a cutting disk. The cutting disk is mounted below the body 40. The cutting disk is configured to cut vegetation. Further, the self-moving device further includes a cutting motor. The cutting motor has a rotatable output shaft. The cutting disk is connected to the output shaft of the cutting motor. The cutting disk rotates along with the output shaft. The cutting motor is connected to a controller. The controller controls the cutting motor to start. When the cutting motor is started, the output shaft may be used to drive the cutting disk to work to enable the cutting disk to execute a cutting action.

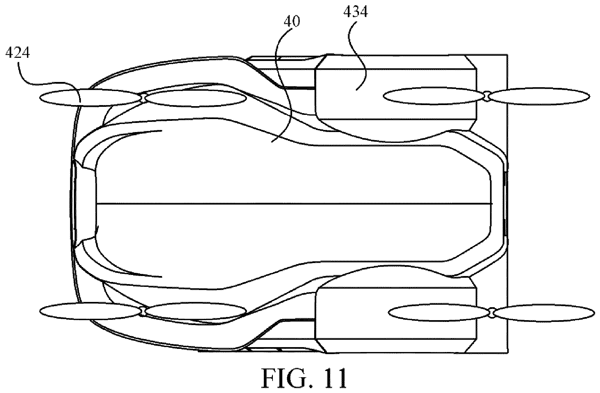

Specifically, the specific structure and form of the flight module 420 may also be determined according to an actual case. In an embodiment, as shown in FIG. 10, the flight module 420 includes a drive motor and a rotary wing assembly. The drive motor is connected to the rotary wing assembly 421. The rotary wing assembly 421 is driven by the drive motor to rotate. As shown in FIG. 10 and FIG. 11, the flight module includes a plurality of rotary wing assemblies 421. The plurality of rotary wing assemblies 421 are disposed above the body 40 of the self-moving device. Each rotary wing assembly 421 includes a support portion 422 and a propeller 424. Each rotary wing assembly 421 is driven by the drive motor to rotate. One end of the support portion 422 is connected to the body 40, the drive motor is connected to the other end of the support portion 422, and the propeller 424 is connected to the drive motor and is driven by the drive motor to rotate. Specifically, in this embodiment, there are four rotary wing assemblies 421. The four rotary wing assemblies 421 have identical structure, two rotary wing assemblies 421 are respectively disposed on a left side and a right side of the body 40 with a horizontal axis of the body 40 in the advancing direction as the center, and the four rotary wing assemblies 421 are centrosymmetrically disposed with the centre of gravity of the body 40 as the center.

The support portion 422 of the rotary wing assembly 421 and the body 40 is disposed perpendicular to the horizontal axis in the advancing direction. The support portion 422 may be alternatively disposed at an inclined angle from the horizontal axis. The centre of gravity of the support portion 422 is located above the body 40. In an embodiment, an end of the support portion 422 is fixedly connected to the body 40. In another embodiment, the flight module 420 is detachably connected to the body of the self-moving device 400. Specifically, an end of the support portion 422 is detachably connected to the body 40. When the self-moving device only needs to work in a single region or the self-moving device is in a standby state, the support portion 422 may be detached from the body 40 to reduce a volume and weight of the self-moving device, so as to enable the self-moving device to work more flexibly and facilitate carrying and storage. When the self-moving device needs to be transferred between a plurality of regions, the support portion 422 of the rotary wing assembly 421 is mounted on the body 40, to enable the self-moving device to be transferred from one working region to another through the flight of the flight module.

The flight module may further include a connecting member used to enable the support portion 422 to fold relative to the body 40. The connecting member is connected between the body 40 and the support portion 422. The number of the connecting members is equal to the number of the rotary wing assemblies 421. When the self-moving device only works in a single region or the self-moving device is in a standby state, the connecting member may be adjusted to fold the support portion 422 towards an inner side of the body 40, thereby reducing the volume of the self-moving device to facilitate storage of the self-moving device. When the self-moving device needs to be transferred between a plurality of regions, the connecting member may be adjusted to unfold the support portion 422 from the inner side of the body 40, to enable the self-moving device to be transferred from one region to another through the flight of the flight module.

Specifically, in an embodiment, the connecting member includes a driving gear, a driven gear, and a screw. The driving gear is connected to the body 40. The driven gear is connected to the support portion 422. The driven gear meshes with the driving gear. A connecting groove is provided in the driven gear. A threaded hole is provided in the body 40. A screw passes through the connecting groove to be threaded to the threaded hole. When the support portion 422 needs to be folded downward from above the body 40, the screw is loosened, the driving gear is then rotated, and the driving gear drives the driven gear to rotate to further drive the support portion 422 to rotate downwards. The rotation of the driving gear is stopped when a desired angle is reached, and the screw is tightened to lock the driven gear to fold the support portion 422. The angle of rotation is specifically set according to an angle between the support portion 422 and the horizontal axis. Preferably, the support portion 422 is folded towards an inner side of the body 40 to a horizontal position. When the self-moving device needs to perform a flight task to unfold the support portion 422, the screw is loosened, the driving gear is then rotated, and the driving gear drives the driven gear to rotate to further drive the support portion 422 to rotate upwards. The rotation of the driving gear is stopped when a desired angle is reached, and the screw is tightened to lock the driven gear to unfold the support portion 422.

In another embodiment, the connecting member includes a worm wheel, a worm screw, a worm mounting base, and a screw. The worm mounting base is connected to the body 40. The worm screw is connected to the worm mounting base. The worm wheel is connected to the support portion 422. The worm wheel meshes with the worm screw. A connecting groove is provided in the worm wheel. A threaded hole is provided in the support portion 422. The screw is threaded to the threaded hole through the connecting groove. When the support portion 422 needs to be folded downward from above the body 40, the screw is loosened, the worm screw is then rotated, and the worm screw then drives the worm wheel to rotate to further drive the support portion 422 to rotate downwards. The rotation of the worm screw is stopped when a desired angle is reached, and the screw is tightened to lock the worm wheel to fold the support portion 422. The angle of rotation is specifically set according to an angle between the support portion 422 and the horizontal axis. Preferably, the support portion 422 is folded towards the inner side of the body 40 to a horizontal position. When the self-moving device needs to perform a flight task to unfold the support portion 422, the screw is loosened, the worm screw is then rotated, and the worm screw then drives the worm wheel to rotate to further drive the support portion 422 to rotate upwards. The rotation of the worm screw is stopped when a desired angle for working is reached, and the screw is tightened to lock the worm wheel to unfold the support portion 422.

A gear structure and a worm screw structure are respectively used for the foregoing connecting members. It should be noted that the implementations of the connecting members are not limited to the manners described in the foregoing embodiments, provided that the support portion 422 can fold relative to the body 40. A connecting member enabling the support portion 422 to fold relative to the body 40 is disposed. After the self-moving device finishes working, the rotary wing assembly 421 may be folded and retracted towards the inner side of the body 40, so as to facilitate storage and carrying of the self-moving device. When the self-moving device needs to be transferred between a plurality of regions, the rotary wing assembly 421 is unfolded from the inner side of the body 40 and fixed, to enable the self-moving device to be transferred from one region to another through the flight of the flight module.

As shown in FIG. 10, a drive motor 426 is connected to the other end of the support portion 422, and the propeller 424 is mounted at the axis of an output end of the drive motor 426. The propeller 424 may be a wheel propeller or may be a free propeller or may be a ducted propeller. There are four rotary wing assemblies 421 in this embodiment. However, it should be noted that the number of the rotary wing assemblies 421 is not limited thereto, and may be 3, 6, 8 or larger. When there are more rotary wing assemblies 421, the rotation of the propellers 424 in the rotary wing assemblies 421 provides a larger lift, and a heavier load can be carried. The specific number may be set according to the overall weight of the self-moving device and the type of the propeller 424.

Further, the flight module 420 further includes an electronic speed regulator. The electronic speed regulator is disposed on the support portion 422 and is connected to an end opposite to the output end of the drive motor 426. The electronic speed regulator is configured to adjust an output power of the drive motor 426 to adjust a rotational speed of the propeller 424. A working principle of controlling the rotational speed of the propeller 424 to control the flight attitude of the self-moving device is as follows: When the rotational speeds of the four propellers 424 simultaneously increase or simultaneously decrease, if a generated resultant force is greater than or less than a gravitational force exerted on the self-moving device, the self-moving device may ascend or descend for vertical take-off and landing. When the rotational speeds of the four propellers 424 are the same, a generated resultant force is equal to a gravitational force exerted on the self-moving device, the self-moving device may hover. When the rotational speed of two propellers 424 in the front in a flight direction of the body 40 is greater than or less than the rotational speed of two propellers 424 in the rear, the self-moving device may move forward or backward. When the rotational speed of the two propellers 424 on the left side of the body 40 is greater than or less than the rotational speed of the two propellers 424 on the right side, the self-moving device may move to the left or right.

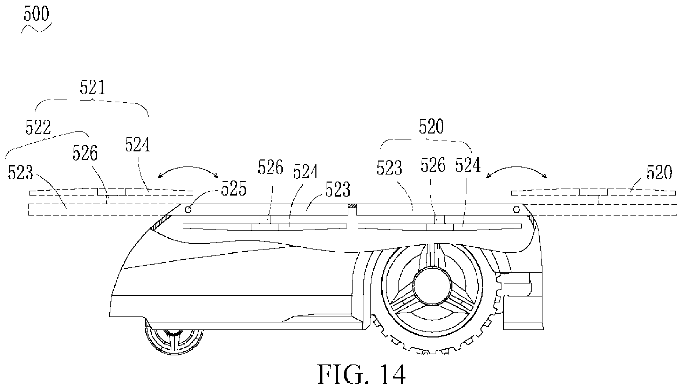

FIG. 14 to FIG. 19 show a sixth embodiment of the present invention. This embodiment is different from the fifth embodiment only in the specific structure and form of the flight module. In this embodiment, the flight module 420 is movable. In the flight mode, a flight module 520 is exposed from a body 50 of a self-moving device 500. In the walking mode, the flight module 520 may be retracted and concealed in the body 50 of the self-moving device 500.

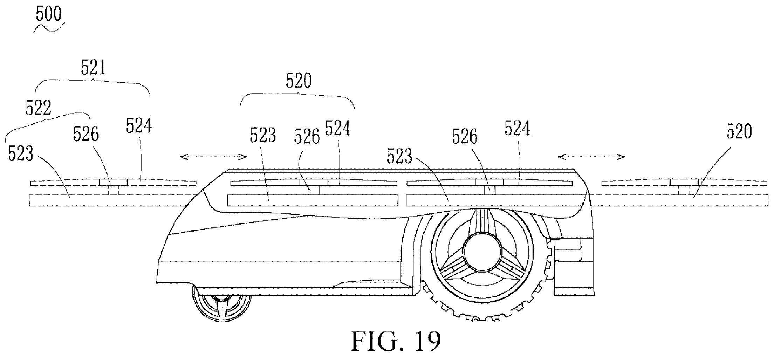

Specifically, the flight module 520 is movable in a plurality forms. For example, as shown in FIG. 14 to FIG. 18, the flight module 520 is rotatable. As shown in FIG. 19, the flight module 520 is displaceable. Certainly, the foregoing forms are only examples for description. A specific manner in which the flight module 520 is movable is not limited the foregoing forms, provided that "In the flight mode, the flight module 520 is exposed from the body 50 of the self-moving device 500. In the walking mode, the flight module 520 may be retracted and concealed in the body 50 of the self-moving device 500."

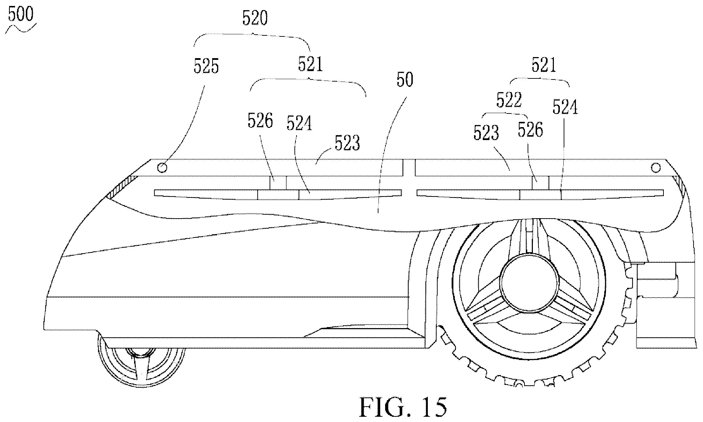

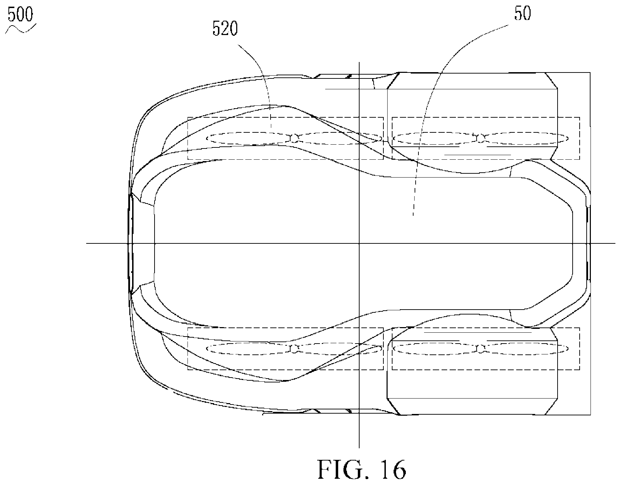

As shown in FIG. 14 to FIG. 18, the self-moving device 500 includes the flight module 520. The structures or modules other than the flight module 520 of the self-moving device 500 are the same as those in the fifth embodiment. In this embodiment, the flight module 520 includes a drive motor and a rotary wing assembly 521. The drive motor is connected to the rotary wing assembly 521. In the flight mode, the rotary wing assembly 521 is driven by a motor to rotate. The flight module 520 further includes a rotating shaft 525. The rotary wing assembly 521 may rotate around the rotating shaft 525. Specifically, as shown in FIG. 15 and FIG. 16, in the walking mode, the rotary wing assembly 521 is located in the body 50. As shown in FIG. 14, FIG. 17, and FIG. 18, in the flight mode, the rotary wing assembly 521 may rotate along the rotating shaft 525 counterclockwise by 180 degrees, so that the rotary wing assembly 521 is exposed from the body 50 of the self-moving device 500. When the self-moving device 500 is switched to the walking mode again, the rotary wing assembly 521 rotates along the rotating shaft 525 clockwise by 180 degrees, so that the rotary wing assembly 521 is retracted in the body 50 again.

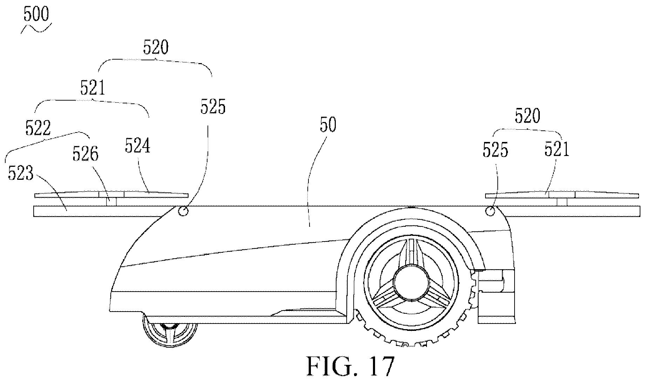

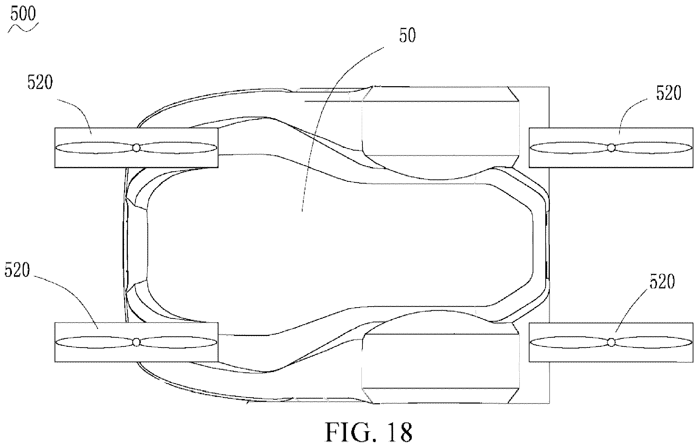

Specifically, each rotary wing assembly 521 includes a support portion 522 and a propeller 524. Each rotary wing assembly 521 is driven by the drive motor to rotate. An end of the support portion 522 is connected to the body 50, and a rotating shaft 525 is disposed at the connection. The support portion 522 is rotatable around the rotating shaft 525. Further, the drive motor is connected to the other end of the support portion 522. The propeller 524 is connected to the drive motor and is driven by the drive motor to rotate. Specifically, the support portion 522 includes a base portion 523 connected to the rotating shaft 525 and a supporting arm 526 connecting the base portion 523 and the propeller 524. In this embodiment, when it is necessary to switch modes, the support portion 522 may be driven to rotate around the rotating shaft 525 to change the position of the rotary wing assembly 521. Specifically, as shown in FIG. 17 and FIG. 18, two rotary wing assemblies 521 may be respectively disposed on the left side and the right side of the body, and there are a total of four rotary wing assemblies. In another embodiment, the number of the rotary wing assemblies 521 may be set according to an actual case, and is, for example, 1, 2, 8 or another number, but is not limited to 4.

As shown in FIG. 19, the position of the rotary wing assembly 521 may be alternatively changed in a movement manner. Specifically, the flight module 520 includes a movement unit (not shown). The movement unit can move to drive the flight module 520 to change the position of the flight module 520, for example, through a horizontal movement or a movement in a specific direction. Specifically, as shown in FIG. 19, when the self-moving device 500 is in the walking mode, the rotary wing assembly 521 of the self-moving device 500 is located in the body 50. When the self-moving device 500 is switched from the walking mode to the flight mode, the rotary wing assembly 521 slides outside, so that the rotary wing assembly 521 slides outside and is exposed from the body 50. Specifically, the rotary wing assembly 521 may slide in a horizontal direction shown in FIG. 19. Certainly, the rotary wing assembly 521 may alternatively slide in a vertical direction or another preset direction, provided that the rotary wing assembly 521 can move from inside the body 50 and come outside the body 50. The rotary wing assembly 521 slides in the opposite direction to return to the original position when the self-moving device 500 is switched from the flight mode back to the walking mode to conceal the rotary wing assembly 521 in the body 50. In this embodiment, a specific structure such as a guiderail or a lifting platform may be used to move the rotary wing assembly 521, provided that the rotary wing assembly 521 can be moved. Specific structures are not enumerated herein.

In the sixth embodiment, the flight module 520 is designed to be movable. The flight module 520 is exposed from the body 50 only when the self-moving device 500 is in the flight mode, the flight module 520 is concealed in the body when the self-moving device 500 is in the walking mode. In this way, in one aspect, when the self-moving device 500 is in the walking mode, the flight module 520 exposed from the body 50 is prevented from colliding with, scraping or scratching a surrounding human or object. In another aspect, when the flight module 520 is concealed in the body 50, a volume of the self-moving device 500 is decreased, so that in the walking mode, when walking on the ground, the self-moving device 500 can avoid an obstacle more easily and cut grass with a higher coverage ratio. In this embodiment, the flight module 520 being exposed from the body is that the flight module 520 is exposed from the body to make a flight. The flight module 520 being concealed in the body 50 is that compared with the case in the flight mode, the flight module 520 is mostly concealed in the body 50. A specific extent to which the flight module 520 is concealed is not specifically limited provided that the flight module 520 does not affect the walking and working of the self-moving device 500.

A specific working process of the self-moving device in this embodiment is described below by using an example in which a control module is used to intelligently and automatically control the self-moving device:
A working time of the self-moving device in a same working region is set in advance in the information prestorage module of the control module 410, and a boundary coordinate range of the working region is prestored in the information prestorage module. Within the preset working time, the control module controls to start the drive motor of the walking module, and the drive motor drives the steering wheel 432 and the drive wheel 434 to rotate to enable the self-moving device to travel. At the same time, the control module 410 turns on a cutting motor, the cutting motor drives the cutting disk to rotate, and the cutting disk cuts vegetation in the working region. The positioning module monitors the position of the self-moving device and sends the coordinates of the position to the control module. When it is detected that the self-moving device reaches a boundary of the working region, the control module 410 controls the walking module 430 to steer to continue with cutting work. After the self-moving device 400 has worked in a same working region for a time exceeding the preset working time and needs to move to another working region to work, the control module enables the drive motor 426 of the flight module to operate to control the flight module to take off. The coordinates of the position of another target working region have been preset in the control module. The control module adjusts a rotating direction and a rotational speed of a drive motor 426 of each rotary wing assembly 421 according to a flight position of the self-moving device detected by the positioning module to control a flight state of the flight module. After the positioning module detects that the self-moving device reaches the target working region, the control module controls a running state of each drive motor 426 to control the flight module to land. After the self-moving device lands on the ground, the control module 410 enables the drive motor and the cutting motor of the walking module 430, to enable the self-moving device 400 to continue to travel in the target working region and perform cutting work.

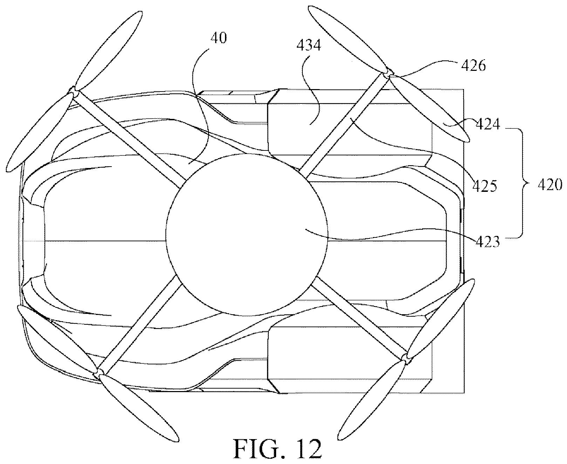

In an embodiment, for a specific structure of the flight module 420, referring to FIG. 12, the flight module 420 includes a mounting plate 423 and a plurality of rotary wing assemblies 421. The mounting plate 423 is disposed at the top of the body 40. The rotary wing assembly 421 includes a connecting arm 425 and a propeller 424. The rotary wing assembly 421 is driven by the drive motor 426 to rotate. One end of the connecting arm 425 is connected to the mounting plate 423, and the other end extends towards an outer side of the mounting plate 423. The connecting arms 425 are centrosymmetrically disposed with the mounting plate 423 as a symmetrical center, and two connecting arms 425 are respectively disposed on a left side and a right side of the body 40. The connecting arms 425 are all located in a same horizontal plane. The drive motor 426 is connected to the other end of the connecting arm 425, and the propeller 424 is connected to the drive motor 426.

In this embodiment, the mounting plate 423 is fixedly connected to the body 40. In another embodiment, the mounting plate 423 is detachably connected to the body 40. When the self-moving device only needs to work in a single region or the self-moving device is in a standby state, the mounting plate 423 and the connecting arm 425 may be detached together from the body 40 to decrease the volume and weight of the self-moving device, so as to enable the self-moving device to work more flexibly and facilitate carrying and storage. When the self-moving device needs to be transferred between a plurality of regions, the mounting plate 423 is mounted on the body 40. In this example, there are four rotary wing assemblies 421. The four rotary wing assemblies 421 have identical structure. The connecting arms 425 of the four rotary wing assemblies 421 are centrosymmetrically disposed around the mounting plate 423 with the mounting plate 423 as the center. Two rotary wing assemblies 421 are respectively disposed on a left side and a right side of the body 40. The connecting arm 425 extends horizontally towards an outer side of the mounting plate 423, so that the four connecting arms 425 are located in the same horizontal plane. The connecting arms 425 may also extend towards the outer side of the mounting plate 423 inclining at a small angle from the horizontal plane. The connecting arm 425 may be fixedly or detachably connected to the mounting plate 423.

In another embodiment, as shown in FIG. 14 to 19, the flight module 520 is retractably mounted in the body 50. In the flight mode, the control module 410 controls the flight module 520 to be exposed from the body 50 of the self-moving device 500 to drive the self-moving device 500 to fly. In the walking mode, the control module 410 controls the flight module 520 to be concealed in the body 50, so as to prevent the flight module 520 from hindering the walking of the self-moving device 500 on the ground.

In another embodiment, the flight module may further include a connecting member configured to the connecting arm 425 relative to the body 40. The connecting member is respectively connected to the mounting plate 423 and the connecting arm 425. The number of the connecting members is equal to the number of the rotary wing assemblies 421. When the self-moving device only works in a single region or the self-moving device is in a standby state, the connecting member may be adjusted to fold the connecting arm 425 towards the inner side of the body 40, thereby reducing the volume of the self-moving device to facilitate storage of the self-moving device. When the self-moving device needs to be transferred between a plurality of working regions, the connecting member may be adjusted to unfold the connecting arm 425 from the inner side of the body 40, so that the self-moving device 400 may be transferred from one region to another through the flight of the flight module.

Specifically, in an embodiment, the connecting member includes a driving gear, a driven gear, and a screw. The driving gear is connected to the mounting plate 423. The driven gear is connected to the connecting arm 425. The driven gear meshes with a driving gear. A connecting groove is provided in the driven gear. A threaded hole is provided in the mounting plate 423. A screw passes through the connecting groove to be threaded to the threaded hole. When the connecting arm 425 needs to be folded and retracted inwards from the outer side of the body 40, the screw is loosened, the driving gear is then rotated, and the driving gear drives the driven gear to rotate to further drive the connecting arm 425 to rotate towards the inner side of the body 40. The rotation of the driving gear is stopped when a desired angle is reached, and the screw is tightened to lock the driven gear to fold the connecting arm 425. When the folded and retracted connecting arm 425 needs to be unfolded towards the outer side of the body 40, the screw is loosened, the driving gear is then rotated, and the driving gear drives the driven gear to rotate to further drive the connecting arm 425 to rotate towards the outer side of the body 40. The rotation of the driving gear is stopped when a desired angle is reached, and the screw is tightened to lock the driven gear to unfold the connecting arm 425.

In another embodiment, the connecting member includes a worm wheel, a worm screw, a worm mounting base, and a screw. The worm mounting base is connected to the mounting plate 423. The worm screw is connected to the worm mounting base. The worm wheel is connected to the connecting arm 425. The worm wheel meshes with the worm screw. A connecting groove is provided in the worm wheel. A threaded hole is provided in the connecting arm 425. The screw is threaded to the threaded hole through the connecting groove. When the connecting arm 425 needs to be folded and retracted inwardly from the outer side of the body 40, the screw is loosened, the worm screw is then rotated, and the worm screw then drives the worm wheel to rotate to further drive the connecting arm 425 to rotate towards the inner side of the body 40. The rotation of the worm screw is stopped when a desired angle is reached, and the screw is tightened to lock the worm wheel to fold the connecting arm 425. When the folded and retracted connecting arm 425 needs to be unfolded towards the outer side of the body 40, the screw is loosened, the worm screw is then rotated, and the worm screw then drives the worm wheel to rotate to further drive the connecting arm 425 to rotate towards the outer side of the body 40. The rotation of the worm screw is stopped when a desired angle for working is reached, and the screw is tightened to lock the worm wheel to unfold the connecting arm 425.

A gear structure and a worm screw structure are respectively used for the foregoing connecting members. It should be noted that the implementations of the connecting members are not limited to the manners described in the foregoing embodiments, provided that the connecting arm 425 can be folded relative to the body 40. A connecting member for enabling the connecting arm 425 to fold relative to the body 40 is disposed. After the self-moving device finishes working, and the rotary wing assembly 421 may be folded and retracted towards the inner side of the body 40, so as to facilitate storage and carrying of the self-moving device. When the self-moving device needs to be transferred between a plurality of regions, and the rotary wing assembly 421 is unfolded from the inner side of the body 40 and fixed, to enable the self-moving device to be transferred from one region to another through the flight of the flight module.

As shown in FIG. 12, the drive motor 426 is connected to an end of an outer side of the connecting arm 425. The propeller 424 is mounted at the axis of the output end of the drive motor 426. The propeller 424 may be a wheel propeller or may be a free propeller or may be a ducted propeller. Further, the flight module further includes an electronic speed regulator. The electronic speed regulator is disposed on the support portion and is connected to an end opposite to the output end of the drive motor 426. The electronic speed regulator is configured to adjust the output power of the drive motor 426 to adjust the rotational speed of the propeller 424. There are four rotary wing assemblies 421 in this embodiment. However, it should be noted that the number of the rotary wing assemblies 421 is not limited thereto, and may be 3, 6, 8 or larger. When there are more rotary wing assemblies 421, the rotation of the propellers 424 in the rotary wing assemblies 421 provides a larger lift, and a heavier load can be carried. The specific number may be set according to the overall weight of the self-moving device and the type of the propeller 424.

In an embodiment, each rotary wing assembly 421 includes two propellers 424. One drive motor 426 is respectively connected to an upper portion and a lower portion of the connecting arm 425. The two drive motors 426 are mirror-symmetrically disposed and are located on a same axis. The output end of each drive motor 426 is connected to one propeller 424. The upper propeller 424 and the lower propeller 424 have identical structure and performance but have opposite rotating directions. Both the upper propeller 424 and the lower propeller 424 blow air downward. A larger gap between the two propellers 424 is more desirable. When the gap is larger, there is smaller interference between the air flows of the upper and lower propellers 424, so that flight efficiency can be improved and a load-bearing capability can be greatly improved.

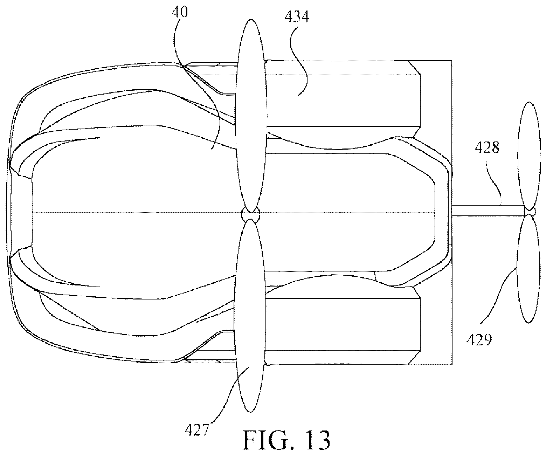

In an embodiment, for a specific structure of the flight module, referring to FIG. 13, the flight module includes a body propeller 427, a tail connecting arm 428, and a tail propeller 429. The body propeller 427 is mounted at the top of the body 40, the tail connecting arm 428 is mounted behind the body 40, the tail propeller 429 is connected to the tail connecting arm 428, and a rotating direction of the tail propeller 429 is opposite to a rotating direction of the body propeller 427.

Specifically, the body propeller 427 is mounted at the central position of the top of the body 40. A blade of the body propeller 427 is mounted on the body 40. A rotating surface of the blade of the body propeller 427 is parallel to the horizontal plane. Further, the body propeller 427 includes a periodic variable-pitch and total-pitch controller and a blade swing module. The periodic variable-pitch and total-pitch controller controls a blade pitch of the body propeller 427. The blade swing module is mounted to overcome the impact of an asymmetrical lift of the body propeller 427 in a horizontal direction on the flight, thereby implementing a high-speed flight.

The tail connecting arm 428 is connected to a tail portion of the body 40. The tail propeller 429 is connected to the tail connecting arm 428. The blade of the tail propeller 429 is mounted on the tail connecting arm 428. A blade rotating surface of the tail propeller 429 is parallel to the horizontal plane. Further, the tail propeller 429 includes a total-pitch controller. The total-pitch controller controls a blade pitch of the tail propeller 429. Because the rotating direction of the tail propeller 429 is opposite to the rotating direction of the body propeller 427, the torque of the tail propeller 429 is opposite to the torque of the body propeller 427. A torque difference between the body propeller 427 and the tail propeller 429 is controlled to control a flight direction of the self-moving device. The blade swing module may also be disposed at the tail propeller 429, so that an asymmetrical lift of the tail propeller 429 in the horizontal direction can be overcome. A diameter of the blade of the body propeller 427 is greater than a diameter of the blade of the tail propeller 429. However, to enable the torque of the body propeller 427 to match that of the tail propeller 429, a difference between the diameters of the blades of the body propeller 427 and the tail propeller 429 cannot be too large. The horizontal stability of the flight of a lawn mower is controlled by the body propeller 427 with a large diameter.

Further, the flight module 420 further includes a motor and a transmission. The motor and the transmission are both disposed inside the body 40 below the body propeller 427. The transmission is connected to the rotational axis of the body propeller 427 and the rotational axis inside the tail connecting arm 428, a driving force generated by the motor is transferred via the transmission to the rotational axis of the body propeller 427 and the rotational axis inside the tail connecting arm 428 and drives the rotational axes to rotate, thereby implementing the rotation of the body propeller 427 and the tail propeller 429. The motor is connected to the controller, and the controller controls the output power of the motor to control the rotational speeds of the body propeller 427 and the tail propeller 429 to control a flight state of the self-moving device.

In an embodiment, the body propeller 427 and the tail connecting arm 428 are detachably connected to the body 40. The body propeller 427 or the tail connecting arm 428 is detachably connected to the body 40, so that the volume and weight of the self-moving device may be reduced when the self-moving device is in a standby state, so as to facilitate carrying and storage.

In another embodiment, a connecting member is mounted between the tail connecting arm 428 and the body 40. The connecting member may enable the tail connecting arm 428 to fold and unfold relative to the body 40. The tail connecting arm 428 may be folded and unfolded relative to the body 40, so that the volume of the self-moving device is reduced when the self-moving device is in a standby state to facilitate carrying and storage.

A specific working process of the self-moving device in this embodiment is described below by using an example in which the control module is used to intelligently and automatically control the self-moving device:
A working time of the self-moving device in a same working region is set in advance in the information prestorage module of the control module, and a boundary coordinate range of the working region is prestored in the information prestorage module. Within the preset working time, the control module controls to start the drive motor of the walking module, the drive motor drives the steering wheel and the drive wheel 434 to rotate to enable the self-moving device to travel. At the same time, the control module turns on a cutting motor, the cutting motor drives the cutting disk to rotate, and the cutting disk cuts vegetation in the working region. The positioning module monitors the position of the self-moving device and sends the coordinates of the position to the control module. When it is detected that the self-moving device reaches a boundary of the working region, the control module controls the walking module to steer to continue with cutting work. After the self-moving device has worked in a same working region for a time exceeding a preset working time and needs to move to another working region to work, the control module enables the motor of the flight module to operate. The motor uses the transmission to transfer the driving force to the body propeller 427 and the tail propeller 429 and drive the body propeller 427 and the tail propeller 429 to rotate, so as to enable the flight module to drive the self-moving device to fly. The coordinates of the position of another target working region have been preset in the control module. The control module adjusts an output power of the motor according to a flight position of the self-moving device detected by the positioning module, and the total-pitch controllers in the body propeller 427 and the tail propeller 429 control the flight state of the flight module. After the positioning module detects that the self-moving device reaches the target working region, the control module controls the output power of the motor to control the flight module to land. After the self-moving device lands on the ground, the control module 410 enables the drive motor and the cutting motor of the walking module, to enable the self-moving device to continue to travel in the target working region and perform cutting work.

In the foregoing embodiments, the self-moving device further includes a transport platform, and the transport platform is configured to transport goods. The transport platform may be disposed below a mower body of the self-moving device or may be disposed behind the mower body. In an embodiment, the transport platform is foldably connected to the mower body. When goods need to be transported, the transport platform protrudes towards an outer side of the mower body from below or behind the mower body. After the goods are unloaded, the transport platform is retracted below or behind the mower body from the outer side of the mower body. The transport platform is foldably connected to the mower body, so that the volume of the self-moving device during working can be reduced, so as to facilitate grass cutting work of the self-moving device.

When the self-moving device flies between different working regions, it may be convenient for a user to load goods by using the transport platform of the self-moving device, so as to transfer goods between the different working regions, thereby improving the efficiency of transporting goods.

In an embodiment, the self-moving device further includes a battery pack. The battery pack supplies energy for the self-moving device to work. Specifically, the battery pack is electrically connected to the flight module, the walking module, the positioning module, and the controller and supplies power thereto. A portable and rechargeable storage battery is used for the battery pack. The storage battery may be a nickel-manganese battery, a nickel hydrogen battery, a lithium battery, a lithium polymer battery or the like. Preferably, a lightweight, high-power lithium polymer battery pack is used. Preferably, a high-strength carbon fiber composite material is used for a housing and the flight module of the mower body of the self-moving device, so that the overall weight can be reduced, and anti-fatigue performance, corrosion-resistant performance, and the like are provided.

The technical features in the foregoing embodiments may be randomly combined. For simplicity of description, all possible combinations of the technical features in the foregoing embodiments are not described. However, it should be considered that these combinations of technical features fall within the scope recorded in the specification provided that these combinations of technical features do not have any conflict.

The foregoing embodiments only describe several implementations of the present invention, and their description is specific and detailed, but cannot therefore be understood as a limitation to the patent scope of embodiments of the present invention. It should be noted that a person of ordinary skill in the art may further make variations and improvements without departing from the conception of embodiments of the present invention, and these all fall within the protection scope of embodiments of the present invention. Therefore, the patent protection scope of embodiments of the present invention should be subject to the appended claims.

## Claims

1. A self-moving device(400), for moving and working in a defined working region, the self-moving device comprising an automatic mower comprising a body(40), a walking module(430), a flight module(420), a cutting module (470) and a control module(410) that are disposed on the body(40), wherein the control module(410) is configured to control the self-moving device(400) to autonomously move and work in the defined working region, a movement mode of the self-moving device(400) comprises a walking mode and a flight mode, in the walking mode, the walking module(430) is configured to drive the self-moving device(400) to walk and work, and in the flight mode, the flight module(420) is configured to drive the self-moving device(400) to fly;
wherein the flight module(420) is movable, such that in the walking mode, the flight module(420) is located in the body(40), and in the flight mode, the flight module(420) is exposed from the body(40); and
wherein in the walking mode, the walking module(430) is configured to drive the self-moving device(400) to walk and work in a continuous working region, and in the flight mode, the flight module(420) is configured to drive the self-moving device(400) to fly between discontinuous working regions including at least two sub-regions that are separate from each other.

2. The self-moving device(400) according to claim 1, wherein the self-moving device(400) comprises an information acquisition module(480) configured to obtain related information, and the control module(410) controls, according to the related information, the self-moving device(400) to move and work.

3. The self-moving device(400) according to claim 2, wherein the related information comprises a timetable, and the control module(410) is configured to control the movement mode of the self-moving device(400) according to the timetable.

4. The self-moving device(400) according to claim 2, wherein the self-moving device(400) further comprises a positioning module for obtaining current position information of the self-moving device(400), the positioning module configured to send the current position information of the self-moving device(400) to the control module(410), and the control module(410) configured to control a flight trajectory of the self-moving device(400) according to the current position information.

5. The self-moving device(400) according to claim 4, wherein the related information comprises target position information, and the control module(410) is configured to control the flight trajectory of the self-moving device(400) according to the current position information and the target position information.

6. The self-moving device (400) according to claim 4 wherein the related information comprises a flight path, and the control module(410) is configured to control the flight trajectory of the self-moving device(400) according to the current position information and the flight path.

7. The self-moving device(400) according to claim 2, wherein the information acquisition module(480) comprises an information presetting module(481) configured to preset related information, and the self-moving device(400) is configured to obtain the related information by using the information presetting module(481),

8. The self-moving device (400) according to claim 2 wherein the information acquisition module(480) comprises a communications module(450), the communications module(450) configured to communicate with an intelligent terminal to receive the related information sent by the intelligent terminal, and the self-moving device(400) configured to obtain the related information by using the communications module(450).

9. The self-moving device(400) according to claim 1, wherein the self-moving device(400) comprises a safety reminder apparatus, and the safety reminder apparatus is turned on in the flight mode.

10. The self-moving device(400) according to claim 1, wherein the self-moving device(400) further comprises a data acquisition module(490), the data acquisition module(490) is configured to acquire environment information of the self-moving device(400), and the control module(410) is configured to control, according to the environment information, the self-moving device(400) to move and work.

11. The self-moving device(400) according to claim 1, wherein the self-moving device(400) further comprises an accident detection module(491), the accident detection module(491) is configured to detect whether a flight hindrance occurs for the self-moving device(400), and if the accident detection module(491) detects that a flight hindrance occurs for the self-moving device(400), the control module(410) controls the self-moving device(400) to actively stop.

12. The self-moving device(400) according to claim 11, wherein the self-moving device(400) comprises an energy module configured to supply energy to the self-moving device(400), the accident detection module(491) is configured to detect whether weather or the energy module satisfies a flight condition of the self-moving device(400), and if the weather or the energy module does not satisfy the flight condition of the self-moving device(400), the control module(410) controls the self-moving device(400) to actively stop.

13. The self-moving device(400) according to claim 1, wherein the weight of the self-moving device(400) is not greater than 25 kg, and a flight height is not greater than 122 meters.

14. The self-moving device(400) according to claim 1, wherein the flight module(420) comprises a drive motor(426) and a rotary wing assembly(521), and the rotary wing assembly(521) is configured to be driven by the drive motor(426) to rotate.

15. An automatic working method of a self-moving device(400) in a defined working region, the self-moving device(400) comprising an automatic mower comprising a walking module(430), a flight module(420), a cutting module (470) and a control module(410), wherein the control module(410) controls the self-moving device(400) to autonomously move and work in the defined working region, a movement mode of the self-moving device(400) comprises a walking mode and a flight mode, wherein in the walking mode, the walking module(430) drives the self-moving device(400) to walk and work, and in the flight mode, the flight module(420) drives the self-moving device(400) to fly;
wherein the flight module(420) is movable and in the walking mode, the flight module(420) is located in the body(40), and in the flight mode, the flight module(420) is exposed from the body(40); and
wherein in the walking mode, the walking module(430) is configured to drive the self-moving device(400) to walk and work in a continuous working region, and in the flight mode, the flight module(420) is configured to drive the self-moving device(400) to fly between discontinuous working regions including at least two sub-regions that are separate from each other.

## Patentansprüche

1. Selbstbewegende Vorrichtung (400) zum Bewegen und Arbeiten in einem definierten Arbeitsbereich, wobei die selbstbewegende Vorrichtung einen automatischen Mäher umfasst, der einen Körper (40), ein Gehmodul (430), ein Flugmodul (420), ein Schneidmodul (470) und ein Steuermodul (410) umfasst, die an dem Körper (40) angeordnet sind, wobei das Steuermodul (410) dazu ausgelegt ist, die selbstbewegende Vorrichtung (400) zu steuern, um sich in dem definierten Arbeitsbereich autonom zu bewegen und zu arbeiten, ein Bewegungsmodus der selbstbewegenden Vorrichtung (400) einen Gehmodus und einen Flugmodus umfasst, wobei in dem Gehmodus das Gehmodul (430) dazu ausgelegt ist, die selbstbewegende Vorrichtung (400) zum Gehen und Arbeiten zu steuern, und in dem Flugmodus das Flugmodul (420) dazu ausgelegt ist, die selbstbewegende Vorrichtung (400) zum Fliegen zu steuern;
wobei das Flugmodul (420) bewegbar ist, sodass im Gehmodus das Flugmodul (420) im Körper (40) angeordnet ist und im Flugmodus das Flugmodul (420) vom Körper (40) aus freigelegt ist; und
wobei im Gehmodus das Gehmodul (430) dazu ausgelegt ist, die selbstbewegende Vorrichtung (400) anzutreiben, um in einem kontinuierlichen Arbeitsbereich zu gehen und zu arbeiten, und im Flugmodus das Flugmodul (420) dazu ausgelegt ist, die selbstbewegende Vorrichtung (400) anzutreiben, um zwischen diskontinuierlichen Arbeitsbereichen zu fliegen, die mindestens zwei Unterbereiche enthalten, die voneinander getrennt sind.

2. Selbstbewegende Vorrichtung (400) gemäß Anspruch 1, wobei die selbstbewegende Vorrichtung (400) ein Informationserfassungsmodul (480) umfasst, das dazu ausgelegt ist, zugehörige Informationen zu erhalten, und das Steuermodul (410) gemäß den zugehörigen Informationen die selbstbewegende Vorrichtung (400) steuert, um sich zu bewegen und zu arbeiten.

3. Selbstbewegende Vorrichtung (400) gemäß Anspruch 2, wobei die zugehörigen Informationen einen Zeitplan umfassen, und das Steuermodul (410) dazu ausgelegt ist, den Bewegungsmodus der selbstbewegenden Vorrichtung (400) gemäß dem Zeitplan zu steuern.

4. Selbstbewegende Vorrichtung (400) gemäß Anspruch 2, wobei die selbstbewegende Vorrichtung (400) ferner ein Positionierungsmodul zum Erhalten aktueller Positionsinformationen der selbstbewegenden Vorrichtung (400) umfasst, wobei das Positionierungsmodul dazu ausgelegt ist, die aktuellen Positionsinformationen der selbstbewegenden Vorrichtung (400) an das Steuermodul (410) zu senden, und das Steuermodul (410) dazu ausgelegt ist, eine Flugbahn der selbstbewegenden Vorrichtung (400) gemäß den aktuellen Positionsinformationen zu steuern.

5. Selbstbewegende Vorrichtung (400) gemäß Anspruch 4, wobei die zugehörigen Informationen Zielpositionsinformationen umfassen, und das Steuermodul (410) dazu ausgelegt ist, die Flugbahn der selbstbewegenden Vorrichtung (400) gemäß den aktuellen Positionsinformationen und den Zielpositionsinformationen zu steuern.

6. Selbstbewegende Vorrichtung (400) gemäß Anspruch 4, wobei die betreffenden Informationen einen Flugweg umfassen, und das Steuermodul (410) dazu ausgelegt ist, die Flugbahn der selbstbewegenden Vorrichtung (400) gemäß den aktuellen Positionsinformationen und dem Flugweg zu steuern.

7. Selbstbewegende Vorrichtung (400) gemäß Anspruch 2, wobei das Informationserfassungsmodul (480) ein Informationsvoreinstellmodul (481) umfasst, das dazu ausgelegt ist, die zugehörigen Informationen vorzugeben, und die selbstbewegende Vorrichtung (400) dazu ausgelegt ist, die zugehörigen Informationen durch Verwendung des Informationsvoreinstellmoduls (481) zu erhalten.

8. Selbstbewegende Vorrichtung (400) gemäß Anspruch 2, wobei das Informationserfassungsmodul (480) ein Kommunikationsmodul (450) umfasst, wobei das Kommunikationsmodul (450) dazu ausgelegt ist, mit einem intelligenten Endgerät zu kommunizieren, um die durch das intelligente Endgerät gesendeten zugehörigen Informationen zu empfangen, und die selbstbewegende Vorrichtung (400) dazu ausgelegt ist, die zugehörigen Informationen durch Verwendung des Kommunikationsmoduls (450) zu erhalten.

9. Selbstbewegende Vorrichtung (400) gemäß Anspruch 1, wobei die selbstbewegende Vorrichtung (400) eine Sicherheitserinnerungsvorrichtung umfasst, und die Sicherheitserinnerungsvorrichtung im Flugmodus eingeschaltet ist.

10. Selbstbewegende Vorrichtung (400) gemäß Anspruch 1, wobei die selbstbewegende Vorrichtung (400) ferner ein Datenerfassungsmodul (490) umfasst, wobei das Datenerfassungsmodul (490) dazu ausgelegt ist, Umgebungsinformationen der selbstbewegenden Vorrichtung (400) zu erfassen, und das Steuermodul (410) dazu ausgelegt ist, gemäß den Umgebungsinformationen die selbstbewegende Vorrichtung (400) zu steuern, um sich zu bewegen und zu arbeiten.

11. Selbstbewegende Vorrichtung (400) gemäß Anspruch 1, wobei die selbstbewegende Vorrichtung (400) ferner ein Unfallerkennungsmodul (491) umfasst, das Unfallerkennungsmodul (491) dazu ausgelegt ist, zu erkennen, ob eine Flugbehinderung für die selbstbewegende Vorrichtung (400) auftritt, und wenn das Unfallerkennungsmodul (491) erkennt, dass eine Flugbehinderung für die selbstbewegende Vorrichtung (400) auftritt, das Steuermodul (410) die selbstbewegende Vorrichtung (400) steuert, um aktiv anzuhalten.

12. Selbstbewegende Vorrichtung (400) gemäß Anspruch 11, wobei die selbstbewegende Vorrichtung (400) ein Energiemodul umfasst, das dazu ausgelegt ist, die selbstbewegende Vorrichtung (400) mit Energie zu versorgen, das Unfallerkennungsmodul (491) dazu ausgelegt ist, zu erkennen, ob das Wetter oder das Energiemodul eine Flugbedingung der selbstbewegenden Vorrichtung (400) erfüllt, und wenn das Wetter oder das Energiemodul die Flugbedingung der selbstbewegenden Vorrichtung (400) nicht erfüllt, das Steuermodul (410) die selbstbewegende Vorrichtung (400) steuert, um aktiv anzuhalten.

13. Selbstbewegende Vorrichtung (400) gemäß Anspruch 1, wobei das Gewicht der selbstbewegenden Vorrichtung (400) nicht mehr als 25 kg und die Flughöhe nicht mehr als 122 Meter beträgt.

14. Selbstbewegende Vorrichtung (400) gemäß Anspruch 1, wobei das Flugmodul (420) einen Antriebsmotor (426) und eine Drehflügelanordnung (521) umfasst und die Drehflügelanordnung (521) dazu ausgelegt ist, durch den Antriebsmotor (426) in Drehung versetzt zu werden.

15. Automatisches Arbeitsverfahren einer selbstbewegenden Vorrichtung (400) in einem definierten Arbeitsbereich, wobei die selbstbewegende Vorrichtung (400) einen automatischen Mäher umfasst, der ein Gehmodul (430), ein Flugmodul (420), ein Schneidmodul (470) und ein Steuermodul (410) umfasst, wobei das Steuermodul (410) die selbstbewegende Vorrichtung (400) steuert, um sich in dem definierten Arbeitsbereich selbständig zu bewegen und zu arbeiten, ein Bewegungsmodus der selbstbewegenden Vorrichtung (400) einen Gehmodus und einen Flugmodus umfasst, wobei im Gehmodus das Gehmodul (430) die selbstbewegende Vorrichtung (400) zum Gehen und Arbeiten antreibt, und im Flugmodus das Flugmodul (420) die selbstbewegende Vorrichtung (400) zum Fliegen antreibt;
wobei das Flugmodul (420) bewegbar ist und im Gehmodus das Flugmodul (420) im Körper (40) angeordnet ist und im Flugmodus das Flugmodul (420) vom Körper (40) aus freigelegt ist; und
wobei im Gehmodus das Gehmodul (430) dazu ausgelegt ist, die selbstbewegende Vorrichtung (400) anzutreiben, um in einem kontinuierlichen Arbeitsbereich zu gehen und zu arbeiten, und im Flugmodus das Flugmodul (420) dazu ausgelegt ist, die selbstbewegende Vorrichtung (400) anzutreiben, um zwischen diskontinuierlichen Arbeitsbereichen zu fliegen, die mindestens zwei Unterbereiche enthalten, die voneinander getrennt sind.

## Revendications

1. Dispositif automoteur (400), destiné à se déplacer et à fonctionner dans une région de travail définie, le dispositif automoteur comprenant une tondeuse automatique comprenant un corps (40), un module de marche (430), un module de vol (420), un module de coupe (470) et un module de commande (410) qui sont disposés sur le corps (40), dans lequel le module de commande (410) est configuré pour commander le dispositif automoteur (400) pour qu'il se déplace et fonctionne de manière autonome dans la région de travail définie, un mode de déplacement du dispositif automoteur (400) comprend un mode de marche et un mode de vol, dans le mode de marche, le module de marche (430) est configuré pour entraîner le dispositif automoteur (400) pour qu'il marche et fonctionne, et dans le mode de vol, le module de vol (420) est configuré pour entraîner le dispositif automoteur (400) pour qu'il vole ;
dans lequel le module de vol (420) est mobile, de telle sorte que dans le mode de marche, le module de vol (420) est situé dans le corps (40), et dans le mode de vol, le module de vol (420) est exposé à partir du corps (40) ;
et
dans lequel dans le mode de marche, le module de marche (430) est configuré pour entraîner le dispositif automoteur (400) pour qu'il marche et fonctionne dans une région de travail continue, et dans le mode de vol, le module de vol (420) est configuré pour entraîner le dispositif automoteur (400) pour qu'il vole entre des régions de travail discontinues incluant au moins deux sous-régions qui sont séparées l'une de l'autre.

2. Dispositif automoteur (400) selon la revendication 1, dans lequel le dispositif automoteur (400) comprend un module d'acquisition d'informations (480) configuré pour obtenir des informations associées, et le module de commande (410) commande, en fonction des informations associées, le dispositif automoteur (400) pour qu'il se déplace et fonctionne.

3. Dispositif automoteur (400) selon la revendication 2, dans lequel les informations associées comprennent un programme horaire, et le module de commande (410) est configuré pour commander le mode de déplacement du dispositif automoteur (400) en fonction du programme horaire.

4. Dispositif automoteur (400) selon la revendication 2, dans lequel le dispositif automoteur (400) comprend en outre un module de positionnement pour obtenir des informations de position actuelle du dispositif automoteur (400), le module de positionnement étant configuré pour envoyer les informations de position actuelle du dispositif automoteur (400) au module de commande (410), et le module de commande (410) étant configuré pour commander une trajectoire de vol du dispositif automoteur (400) en fonction des informations de position actuelle.

5. Dispositif automoteur (400) selon la revendication 4, dans lequel les informations associées comprennent des informations de position cible, et le module de commande (410) est configuré pour commander la trajectoire de vol du dispositif automoteur (400) en fonction des informations de position actuelle et des informations de position cible.

6. Dispositif automoteur (400) selon la revendication 4, dans lequel les informations associées comprennent un trajet de vol, et le module de commande (410) est configuré pour commander la trajectoire de vol du dispositif automoteur (400) en fonction des informations de position actuelle et du trajet de vol.

7. Dispositif automoteur (400) selon la revendication 2, dans lequel le module d'acquisition d'informations (480) comprend un module de préréglage d'informations (481) configuré pour prérégler des informations associées, et le dispositif automoteur (400) est configuré pour obtenir les informations associées à l'aide du module de préréglage d'informations (481).

8. Dispositif automoteur (400) selon la revendication 2, dans lequel le module d'acquisition d'informations (480) comprend un module de communication (450), le module de communication (450) étant configuré pour communiquer avec un terminal intelligent pour recevoir les informations associées envoyées par le terminal intelligent, et le dispositif automoteur (400) étant configuré pour obtenir les informations associées à l'aide du module de communication (450).

9. Dispositif automoteur (400) selon la revendication 1, dans lequel le dispositif automoteur (400) comprend un appareil de rappel de sécurité, et l'appareil de rappel de sécurité est activé dans le mode de vol.

10. Dispositif automoteur (400) selon la revendication 1, dans lequel le dispositif automoteur (400) comprend en outre un module d'acquisition de données (490), le module d'acquisition de données (490) est configuré pour acquérir des informations d'environnement du dispositif automoteur (400), et le module de commande (410) est configuré pour commander, en fonction des informations d'environnement, le dispositif automoteur (400) pour qu'il se déplace et fonctionne.

11. Dispositif automoteur (400) selon la revendication 1, dans lequel le dispositif automoteur (400) comprend en outre un module de détection d'accident (491), le module de détection d'accident (491) est configuré pour détecter si un obstacle de vol se produit pour le dispositif automoteur (400), et si le module de détection d'accident (491) détecte qu'un obstacle de vol se produit pour le dispositif automoteur (400), le module de commande (410) commande le dispositif automoteur (400) pour qu'il s'arrête activement.

12. Dispositif automoteur (400) selon la revendication 11, dans lequel le dispositif automoteur (400) comprend un module d'énergie configuré pour fournir de l'énergie au dispositif automoteur (400), le module de détection d'accident (491) est configuré pour détecter si le temps ou le module d'énergie satisfait une condition de vol du dispositif automoteur (400), et si le temps ou le module d'énergie ne satisfait pas la condition de vol du dispositif automoteur (400), le module de commande (410) commande le dispositif automoteur (400) pour qu'il s'arrête activement.

13. Dispositif automoteur (400) selon la revendication 1, dans lequel le poids du dispositif automoteur (400) n'est pas supérieur à 25 kg, et une hauteur de vol n'est pas supérieure à 122 mètres.

14. Dispositif automoteur (400) selon la revendication 1, dans lequel le module de vol (420) comprend un moteur d'entraînement (426) et un ensemble d'aile rotative (521), et l'ensemble d'aile rotative (521) est configuré pour être entraîné par le moteur d'entraînement (426) pour tourner.

15. Procédé de fonctionnement automatique d'un dispositif automoteur (400) dans une région de travail définie, le dispositif automoteur (400) comprenant une tondeuse automatique comprenant un module de marche (430), un module de vol (420), un module de coupe (470) et un module de commande (410), dans lequel le module de commande (410) commande le dispositif automoteur (400) pour qu'il se déplace et fonctionne de manière autonome dans la région de travail définie, un mode de déplacement du dispositif automoteur (400) comprend un mode de marche et un mode de vol, dans lequel dans le mode de marche, le module de marche (430) entraîne le dispositif automoteur (400) pour qu'il marche et fonctionne, et dans le mode de vol, le module de vol (420) entraîne le dispositif automoteur (400) pour qu'il vole ;
dans lequel le module de vol (420) est mobile et dans le mode de marche, le module de vol (420) est situé dans le corps (40), et dans le mode de vol, le module de vol (420) est exposé à partir du corps (40) ; et
dans lequel dans le mode de marche, le module de marche (430) est configuré pour entraîner le dispositif automoteur (400) pour qu'il marche et fonctionne dans une région de travail continue, et dans le mode de vol, le module de vol (420) est configuré pour entraîner le dispositif automoteur (400) pour qu'il vole entre des régions de travail discontinues incluant au moins deux sous-régions qui sont séparées l'une de l'autre.
